# EUROPEAN PATENT SPECIFICATION

(11) **EP 4 578 700 B1**
(45) Date of publication and mention of the grant of the patent: **09.12.2026**
(21) Application number: 24198431.9
(22) Date of filing: 04.09.2024
(51) Int. Cl.: B60K 35/81, G06F 3/04842

(54) **METHOD AND APPARATUS FOR DISPLAYING APPLICATION, MEDIUM, IN-VEHICLE TERMINAL, AND VEHICLE**
VERFAHREN UND VORRICHTUNG ZUR ANZEIGE EINER ANWENDUNG, MEDIUM, FAHRZEUGINTERNES ENDGERÄT UND FAHRZEUG
PROCÉDÉ ET APPAREIL D'AFFICHAGE D'APPLICATION, SUPPORT, TERMINAL EMBARQUÉ ET VÉHICULE

(30) Priority: 28.12.2023 CN 202311840426
(43) Date of publication of application: 02.07.2025
(73) Proprietor: Xiaomi EV Technology Co., Ltd., Beijing 100176 (CN)
(72) Inventor: WANG, Ying, Beijing, 100176 (CN); LI, Luoshanzhu, Beijing, 100176 (CN); FANG, Zhenshuo, Beijing, 100176 (CN)
(74) Representative: Stöckeler, Ferdinand

(56) References cited:
- EP-A1- 4 257 403
- US-A1- 2016 144 714
- US-A1- 2017 010 766
- US-A1- 2017 212 633
- US-A1- 2017 262 158
- US-A1- 2022 219 539

## Description

### TECHNICAL FIELD

The invention relates to the field of electronic technologies, and particularly relates to a method and apparatus for displaying an application, a medium, an in-vehicle terminal, and a vehicle.

### BACKGROUND OF THE INVENTION

Vehicles as a means of transportation, have been widely used in daily life, work and tourism. In the related art, an in-vehicle display screen is located on a control panel at a front end inside a vehicle, and is configured to provide functions such as audio and video playback and vehicle navigation.
US20170212633A1 discloses an automotive control system and a method for operating the same. The method includes receiving a user input through an input device provided on a steering wheel, and controlling a display that is located in front of a driver's seat based on the user input, wherein the input device is located on one side and an opposing side of the steering wheel and is composed of a display including a touch screen.
US20170010766A1 discloses a vehicle-mounted information device that does not create a cause of an erroneous operation. In a vehicle-mounted information device capable of editing objects displayed on a touch panel, an edit mode of displaying a mark indicating a direction in which the object is movable is provided, and by a touch operation onto the mark, the selected object and an object of interest which is located in the direction indicated by the mark are interchanged. EP4257403A1 discloses an automotive display apparatus with enhanced user convenience. An automotive display has a plurality of available functions and is able to perform switching between a home screen and an individual screen, the plurality of functions include a first function group and a second function group, a first button group including a plurality of buttons respectively corresponding to a plurality of functions included in the first function group is displayed on the home screen, a plurality of simple display regions respectively corresponding to a plurality of functions included in the second function group are further displayed on the home screen, and a switching button for performing switching to the individual screen including a detailed display region of the function is displayed in each of the plurality of simple display regions, and the detailed display region, the first button group, and a second button group including a plurality of buttons respectively corresponding to a plurality of functions included in the second function group are displayed on the individual screen.

### SUMMARY OF THE INVENTION

In order to solve the problems in the related art, the invention provides a method and apparatus for displaying an application, a medium, an in-vehicle terminal, and a vehicle. The invention is set out in the appended set of claims.

According to a first aspect of the examples of the invention, a method for displaying an application is provided. The method is performed by an in-vehicle terminal. A current display interface of the in-vehicle terminal includes n application windows, where n≥1. In response to determining n>1, the n application windows are arranged adjacent to each other in a transverse direction.

The method includes:
receiving an application window editing operation for the current display interface; and
adjusting an application window layout of the current display interface according to the application window editing operation and a window queue.

The window queue is configured for continuous adjacent arrangement of the n application windows. A status of the window queue is dynamically updated with change of the application window layout. Serial numbers of the application windows in the window queue sequentially increase in a direction opposite to a starting point direction. A serial number of the application window, closest to a starting point of the window queue, of the n application windows is 1. The starting point direction is a direction towards the starting point of the window queue, close to a driver side, of the in-vehicle terminal.

At least part of a zone of the window queue overlaps a display interface of the in-vehicle terminal, so as to ensure that the application windows in the window queue are displayed in the current display interface.

Optionally, wherein the application window editing operation is a window removing operation; and
the adjusting an application window layout of the current display interface according to the application window editing operation and a window queue comprises:
determining a to-be-removed window in the current display interface according to the window removing operation;
removing the to-be-removed window n from the current display interface;
determining whether an (n+1)th application window exists; and
translating, in response to determining that the (n+1)th application window exists, an application window having a serial number greater than that of the to-be-removed window n in the window queue sequentially in the starting point direction, and displaying the application window in the current display interface.

Optionally, wherein translating an application window having a serial number greater than that of the to-be-removed window n in the window queue sequentially in the starting point direction, and displaying the application window in the current display interface comprise:
obtaining a first width of the (n+1)th application window and a second width of the to-be-removed window; and
determining a translating strategy according to a comparison result of the first width and the second width.

Optionally, wherein determining a translating strategy according to a comparison result of the first width and the second width comprises:

determining, in response to determining that the first width is greater than the second width, the translating strategy to reduce the first width of the (n+1)th application window to the second width, translate the (n+1)th application window in the starting point direction, and display the (n+1)th application window in the current display interface.

Optionally, wherein determining a translating strategy according to a comparison result of the first width and the second width comprises:
determining, in response to determining that the first width is smaller than the second width and an (n+2)th application window exists, the translating strategy to keep a width of the (n+1)th application window unchanged, translate the (n+1)th application window in the starting point direction, display the (n+1)th application window in the current display interface, and translate the (n+2)th application window in the starting point direction by a width equaling a difference between the second width and the first width; and
determining, in response to determining that the first width is smaller than the second width and the (n+2)th application window does not exist, the translating strategy to keep a width of the (n+1)th application window unchanged, translate the (n+1)th application window in the starting point direction, and display the (n+1)th application window in the current display interface.

Optionally, wherein determining a translating strategy according to a comparison result of the first width and the second width comprises:

determining, in response to determining that the first width is equal to the second width, the translating strategy to keep a width of the (n+1)th application window unchanged, translate the (n+1)th application window in the starting point direction, and display the (n+1)th application window in the current display interface.

Optionally, wherein the application window editing operation is a window removing operation; and

the adjusting an application window layout of the current display interface according to the application window editing operation and a window queue comprises:
switching, in response to determining that n=1 and a to-be-removed window corresponding to the window removing operation is not located at a starting point of the window queue, the current display interface to a display interface previous to the current display interface.

Optionally, wherein the current display interface comprises n application windows, and an nth application window comprises two or more different application interfaces. In line with the invention, the application window editing operation is a window width adjusting operation;
the current display interface further comprises width adjusting controls separately configured between every two adjacent the application windows, wherein the width adjusting control is configured to adjust a width of the application windows;
the window width adjusting operation is a first control operation for any one of the width adjusting controls; and
the adjusting an application window layout of the current display interface according to the application window editing operation and a window queue comprises:
at least adjusting the window width of the current display interface according to the first control operation and the window queue.

Optionally, wherein in response to determining n=3, widths of the n application windows each are d/3, wherein d denotes a width of the current display interface;
at least adjusting the window width of the current display interface according to the first control operation and the window queue comprises:
stretching, in response to determining that the first control operation is to drag any one of the width adjusting controls away from the starting point, a width of a target application window to 2d/3, wherein an nth application window in the current display interface is pushed to a display interface subsequent to the current display interface, and the target application window is an application window, close to the starting point, of application windows at two ends of the width adjusting control targeted by the first control operation.

Optionally, wherein in response to determining n=3, widths of the n application windows each are d/3, wherein d denotes a width of the current display interface;
in response to determining that a first application window in the current display interface is located at a starting point of the window queue, the width adjusting control close to the starting point is further configured to adjust a width of an application window, away from the starting point, of application windows at two ends of the width adjusting control; and
at least adjusting the window width of the current display interface according to the first control operation and the window queue further comprises:
   adjusting, in response to determining that the first control operation is to drag a width adjusting control close to the starting point in the starting point direction, a width of a second application window in the current display interface to 2d/3, wherein the first application window is temporarily pushed out of the current display interface in the starting point direction.

Optionally, further comprising:
displaying, after the first application window is temporarily pushed out of the current display interface, a width adjusting control on a first vertical edge, close to the starting point, of the current display interface; and
adjusting, in response to receiving a second control operation for the width adjusting control on the first vertical edge, a width of a second application window in the current display interface to d/3, and translating the first application window temporarily pushed out of the current display interface back to the current display interface, wherein the second control operation is to drag a width adjusting control on the first vertical edge away from the starting point.

Optionally, wherein in response to determining n=2, widths of the n application windows each are d/3 or 2d/3, and the application window with the width of 2d/3 in the current display interface is close to the starting point, wherein d denotes a width of the current display interface;
at least adjusting the window width of the current display interface according to the first control operation and the window queue comprises:
reducing, in response to determining that the first control operation is to drag the width adjusting control in the starting point direction and an (n+1)th application window exists, a width of an application window close to the starting point to d/3, translating an application window, away from the starting point, of the current display interface and the (n+1)th application window in the starting point direction by a width of d/3, and displaying the application window and the (n+1)th application window in the current display interface.

Optionally, wherein in response to determining n=2, widths of the n application windows are d/3 and 2d/3 respectively, and an application window with the width of d/3 in the current display interface is close to the starting point, wherein d denotes a width of the current display interface;
the current display interface further comprises a width adjusting control configured on a second vertical edge, away from the starting point, of the current display interface; and
at least adjusting the window width of the current display interface according to the first control operation and the window queue comprises:
   stretching, in response to determining that the first control operation is to drag a width adjusting control close to the starting point away from the starting point, a width of a first application window in the current display interface to 2d/3, and reducing a width of a second application window in the current display interface to d/3.

Optionally, wherein at least adjusting the window width of the current display interface according to the first control operation and the window queue further comprises:
reducing, in response to determining that the first control operation is to drag a width adjusting control away from the starting point in the starting point direction, a width of the application window away from the starting point direction to d/3; and
translating, in response to determining that an (n+1)th application window exists, the (n+1)th application window in the starting point direction by a width of d/3, and displaying the (n+1)th application window in the current display interface.

Optionally, wherein the application window editing operation is a window adding operation; and
the adjusting an application window layout of the current display interface according to the application window editing operation and a window queue comprises:
adding a to-be-added window to the current display interface at least according to existence of a vacant window position in the current display interface, wherein the to-be-added window is an application window corresponding to the window adding operation.

Optionally, wherein the adding a to-be-added window to the current display interface at least according to existence of a vacant window position in the current display interface comprises:
adjusting, in response to determining that the vacant window position exists in the current display interface, a width of the to-be-added window according to a width of the vacant window position and the width of the to-be-added window, and then adding the to-be-added window to the vacant window position.

Optionally, wherein adjusting a width of the to-be-added window according to a width of the vacant window position and the width of the to-be-added window, and then adding the to-be-added window to the vacant window position comprise:
adding, in response to determining that the width of the to-be-added window is smaller than or equal to the width of the vacant window position, the to-be-added window to the vacant window position according to an original width; and
reducing, in response to determining that a width of the to-be-added window is greater than that of the vacant window position, a width of the to-be-added window to a width of the vacant window position, and then adding the to-be-added window to the vacant window position.

Optionally, wherein in response to determining n=1, a width of the application window is d/3 or 2d/3, and a width of the to-be-added window is d/3, wherein d denotes a width of the current display interface; and
the adding a to-be-added window to the current display interface at least according to existence of a vacant window position in the current display interface comprises:
adding the to-be-added window to the vacant window position adjacent to an application window of an original display interface.

Optionally, wherein in response to determining n=2, a width of the n application windows is selected to be d/3 or 2d/3, wherein d denotes a width of the current display interface; and
the adding a to-be-added window to the current display interface at least according to existence of a vacant window position in the current display interface comprises:
reducing, in response to determining that no vacant window position exists in the current display interface, a width of an application window with a width of 2d/3 in the current display interface to d/3, adding 1 to n, and adding the to-be-added window by a width of d/3 as an nth application window in the current display interface to the current display interface; and
adding, in response to determining that the vacant window position exists in the current display interface, the to-be-added window to the vacant window position of an original display interface.

Optionally, wherein in response to determining n=3, widths of the n application windows each are d/3, wherein d denotes a width of the current display interface; and
the adding a to-be-added window to the current display interface at least according to existence of a vacant window position in the current display interface comprises:
adding the to-be-added window by a width of d/3 to a position of the nth application window in the current display interface, wherein an original nth application window in the current display interface is pushed to a display interface subsequent to the current display interface.

Optionally, wherein the application window editing operation is a window translating operation; and
the adjusting an application window layout of the current display interface according to the application window editing operation and a window queue comprises:
triggering an application window position adjusting button to suspend a to-be-adjusted application window above the window queue, dragging the to-be-adjusted application window to a to-be-adjusted position, and sequentially arranging original application windows backwards along the window queue in a direction opposite to the starting point direction after position determination.

Optionally, wherein the application window editing operation is a window translating operation; and
the adjusting an application window layout of the current display interface according to the application window editing operation and a window queue comprises:
dragging a to-be-adjusted application window to an edge position of the current display interface, activating another display interface adjacent to the current display interface, and conducting reordering in an application window of a new display interface.

In an example not claimed, an apparatus for displaying an application is provided. The apparatus is performed by an in-vehicle terminal. A current display interface of the in-vehicle terminal includes n application windows, where n≥1. In response to determining n>1, the n application windows are arranged adjacent to each other in a transverse direction.

The apparatus includes:
a reception module configured to receive an application window editing operation for the current display interface; and
a first adjustment module configured to adjust an application window layout of the current display interface according to the application window editing operation and a window queue.

The window queue is configured for continuous adjacent arrangement of the n application windows. A status of the window queue is dynamically updated with change of the application window layout. Serial numbers of the application windows in the window queue sequentially increase in a direction opposite to a starting point direction. A serial number of the application window, closest to a starting point of the window queue, of the n application windows is 1. The starting point direction is a direction towards the starting point of the window queue, close to a driver side, of the in-vehicle terminal.

At least part of a zone of the window queue overlaps a display interface of the in-vehicle terminal, so as to ensure that the application windows in the window queue are displayed in the current display interface.

Optionally, the application window editing operation is a window removing operation.

The first adjustment module includes:
a first determination sub-module configured to determine a to-be-removed window in the current display interface according to the window removing operation;
a removal sub-module configured to remove the to-be-removed window n from the current display interface;
a second determination sub-module configured to determine whether an (n+1)th application window exists; and
a first translating sub-module configured to translate, in response to determining that the (n+1)th application window exists, an application window having a serial number greater than that of the to-be-removed window n in the window queue sequentially in the starting point direction, and display the application window in the current display interface.

Optionally, the first translating sub-module includes:
an obtaining sub-module configured to obtain a first width of the (n+1)th application window and a second width of the to-be-removed window; and
a third determination sub-module configured to determine a translating strategy according to a comparison result of the first width and the second width.

Optionally, the third determination sub-module includes:
a fourth determination sub-module configured to determine, in response to determining that the first width is greater than the second width, the translating strategy to reduce the first width of the (n+1)th application window to the second width, translate the (n+1)th application window in the starting point direction, and display the (n+1)th application window in the current display interface.

Optionally, the third determination sub-module includes:
a sixth determination sub-module configured to determine, in response to determining that the first width is smaller than the second width and an (n+2)th application window exists, the translating strategy to keep a width of the (n+1)th application window unchanged, translate the (n+1)th application window in the starting point direction, and display the (n+1)th application window in the current display interface; and translate the (n+2)th application window in the starting point direction by a width equaling a difference between the second width and the first width, and display the (n+2)th application window in the current display interface; and
a seventh determination sub-module configured to determine, in response to determining that the first width is smaller than the second width and the (n+2)th application window does not exist, the translating strategy to keep a width of the (n+1)th application window unchanged, translate the (n+1)th application window in the starting point direction, and display the (n+1)th application window in the current display interface.

Optionally, the third determination sub-module includes:
an eighth determination sub-module configured to determine, in response to determining that the first width is equal to the second width, the translating strategy to keep a width of the (n+1)th application window unchanged, translate the (n+1)th application window in the starting point direction, and display the (n+1)th application window in the current display interface.

Optionally, the application window editing operation is a window removing operation.

The adjustment module includes:
a switching sub-module configured to switch, in response to determining that n=1 and the to-be-removed window is not located at a starting point of the window queue, the current display interface to a display interface previous to the current display interface.

Optionally, n=3, the current display interface includes n application windows, and an nth application window includes two or more different application interfaces.

Optionally, the application window editing operation is a window width adjusting operation.

The current display interface further includes width adjusting controls separately configured between every two adjacent application windows. The width adjusting control is configured to adjust a width of the application windows.

The window width adjusting operation is a first control operation for any one of the width adjusting controls.

The adjustment module includes:
an adjustment sub-module configured to at least adjust a window width of the current display interface according to the first control operation and the window queue.

Optionally, in response to determining n=3, widths of the n application windows each are d/3, where d denotes a width of the current display interface, the adjustment sub-module includes:
a first stretching sub-module configured to stretch, in response to determining that the first control operation is to drag any one of the width adjusting controls away from the starting point, a width of a target application window to 2d/3, where an nth application window in the current display interface is pushed to a display interface subsequent to the current display interface, and the target application window is an application window, close to the starting point, of application windows at two ends of the width adjusting control targeted by the first control operation.

Optionally, in response to determining n=3, widths of the n application windows each are d/3, where d denotes a width of the current display interface, in response to determining that a first application window in the current display interface is located at a starting point of the window queue, the width adjusting control close to the starting point is further configured to adjust a width of the application window, away from the starting point, of application windows at two ends of the width adjusting control.

The adjustment sub-module further includes:
a second stretching sub-module configured to adjust, in response to determining that the first control operation is to drag a width adjusting control close to the starting point in the starting point direction, a width of a second application window in the current display interface to 2d/3, where the first application window is temporarily pushed out of the current display interface in the starting point direction.

Optionally, the apparatus further includes:
a display module configured to display, after the first application window is temporarily pushed out of the current display interface, a width adjusting control on a first vertical edge close to the starting point of the current display interface; and
a second adjustment module configured to adjust, in response to receiving a second control operation for the width adjusting control on the first vertical edge, a width of a second application window in the current display interface to d/3, and translate the first application window temporarily pushed out of the current display interface back to the current display interface, where the second control operation is to drag a width adjusting control on the first vertical edge away from the starting point.

Optionally, in response to determining n=2, widths of the n application windows each are d/3 or 2d/3, and the application window with the width of 2d/3 in the current display interface is close to the starting point, where d denotes a width of the current display interface.

The adjustment sub-module includes:
a first reduction sub-module configured to reduce, in response to determining that the first control operation is to drag the width adjusting control in the starting point direction and an (n+1)th application window exists, a width of the application window close to the starting point to d/3, translate the application window, away from the starting point, of the current display interface and the (n+1)th application window in the starting point direction by a width of d/3, and display the application window and the (n+1)th application window in the current display interface.

Optionally, in response to determining n=2, widths of the n application windows are d/3 and 2d/3 respectively, and the application window with the width of d/3 in the current display interface is close to the starting point, where d denotes a width of the current display interface.

The current display interface further includes a width adjusting control configured on a second vertical edge, away from the starting point, of the current display interface.

The adjustment sub-module includes:
a third stretching sub-module configured to stretch, in response to determining that the first control operation is to drag a width adjusting control close to the starting point away from the starting point, a width of a first application window in the current display interface to 2d/3, and reduce a width of a second application window in the current display interface to d/3.

Optionally, the adjustment sub-module further includes:
a first reduction sub-module configured to reduce, in response to determining that the first control operation is to drag a width adjusting control away from the starting point in the starting point direction, a width of the application window away from the starting point to d/3; and
a second translating sub-module configured to translate, in response to determining that an (n+1)th application window exists, the (n+1)th application window in the starting point direction by a width of d/3, and display the (n+1)th application window in the current display interface.

Optionally, the application window editing operation is a window adding operation;

The first adjustment module includes:
a first adding sub-module configured to add a to-be-added window to the current display interface at least according to existence of a vacant window position in the current display interface, where the to-be-added window is an application window corresponding to the window adding operation.

Optionally, the first adding sub-module includes:
a second adding sub-module configured to adjust, in response to determining that the vacant window position exists in the current display interface, a width of the to-be-added window according to a width of the vacant window position and the width of the to-be-added window, and then add the to-be-added window to the vacant window position.

Optionally, the second adding sub-module includes:
a third adding sub-module configured to add, in response to determining that the width of the to-be-added window is smaller than or equal to the width of the vacant window position, the to-be-added window to the vacant window position according to an original width; and
a fourth adding sub-module configured to reduce, in response to determining that a width of the to-be-added window is greater than that of the vacant window position, a width of the to-be-added window to a width of the vacant window position, and then add the to-be-added window to the vacant window position.

Optionally, a width of the application window is d/3 or 2d/3, and a width of the to-be-added window is d/3, where d denotes a width of the current display interface.

The first adding sub-module includes:
a fifth adding sub-module configured to add, in response to determining that the vacant window position exists in the current display interface, the to-be-added window to the vacant window position adjacent to an application window of an original display interface.

Optionally, in response to determining n=2, a width of the n application windows is selected to be d/3 or 2d/3, where d denotes a width of the current display interface.

The first adding sub-module includes:
a sixth adding sub-module configured to reduce, in response to determining that no vacant window position exists in the current display interface, a width of an application window with a width of 2d/3 in the current display interface to d/3, add 1 to n, and add the to-be-added window by a width of d/3 as an nth application window in the current display interface to the current display interface; and
a seventh adding sub-module configured to add, in response to determining that the vacant window position exists in the current display interface, the to-be-added window to the vacant window position of an original display interface.

Optionally, in response to determining n=3, widths of the n application windows each are d/3, where d denotes a width of the current display interface.

The first adding sub-module includes:
an eighth adding sub-module configured to add the to-be-added window by a width of d/3 to a position of the nth application window in the current display interface, where an original nth application window in the current display interface is pushed to a display interface subsequent to the current display interface.

Optionally, the application window editing operation is a window translating operation.

The adjustment module includes:
a first translating sub-module configured to trigger an application window position adjusting button to suspend a to-be-adjusted application window above the window queue, drag the to-be-adjusted application window to a to-be-adjusted position, and sequentially arrange original application windows backwards along the window queue in a direction opposite to the starting point direction after position determination.

Optionally, the application window editing operation is a window translating operation.

The first adjustment module includes:
a second translating sub-module configured to drag a to-be-adjusted application window to an edge position of the current display interface, activate another display interface adjacent to the current display interface, and conduct reordering in an application window of a new display interface.

According to another aspect of the examples of the invention, a computer-readable storage medium is provided. The computer-readable storage medium stores computer program instructions. The computer program instructions implement steps of the method for displaying an application according to the first aspect of the invention when being executed by a processor.

According to a further aspect of the examples of the invention, an in-vehicle terminal is provided. The in-vehicle terminal includes:
a processor; and
a memory configured to store instructions executable by the processor.

The processor is configured to execute the executable instructions in the memory, so as to implement steps of the method for displaying an application according to the first aspect of the invention.

According to another aspect of the examples of the invention, a vehicle is provided. The vehicle includes the in-vehicle terminal according to the fourth aspect of the invention.

The technical solution according to the examples of the invention can have the following beneficial effects: the in-vehicle terminal adjusts, in response to receiving the application window editing operation for the current display interface, the application window layout of the current display interface according to the application window editing operation and the window queue. The window queue is configured for continuous adjacent arrangement of the n application windows in the current display interface. The status of the window queue is dynamically updated with change of the application window layout of the current display interface. The at least part of the zone of the window queue overlaps the display interface of the in-vehicle terminal, so as to ensure that the application windows in the window queue are displayed in the current display interface. In this way, self-adaptive adjustment of display content and a display window size in the display interface can be implemented according to a user operation, and a use experience of a user can be improved. In addition, one or more application windows can be displayed in the display interface of the in-vehicle terminal, such that the display interface can have more display forms, and a use ratio of the display interface and a visual experience of the user can be improved. In addition, when split-screen display is conducted in the display interface, different applications can be separately displayed in each display window, which facilitates use.

It is to be understood that the above general description and the following detailed description are merely illustrative and explanatory, and do not limit the invention.

### BRIEF DESCRIPTION OF DRAWINGS

Accompanying drawings here are incorporated in the description as a constituent part of the description, illustrate examples conforming to the invention, and serve to describe principles of the invention together with the description.
Fig. 1 is a flow diagram of a method for displaying an application according to an example;
Fig. 2A is a schematic diagram of a current display interface according to an example;
Fig. 2B is a schematic diagram of a current display interface according to another example;
Fig. 3A is a schematic diagram of a window control according to an example;
Fig. 3B is a schematic diagram of moving an application window according to an example;
Fig. 3C is a schematic diagram of a menu of full-screen displaying and removing an application window according to an example;
Fig. 4 is a schematic diagram of removing an application window according to an example;
Fig. 5 is a schematic diagram of removing an application window according to another example;
Fig. 6 is a schematic diagram of removing an application window according to yet another example;
Fig. 7 is a schematic diagram of removing an application window according to still another example;
Fig. 8 is a schematic diagram of a current display interface according to yet another example;
Fig. 9A is a schematic diagram of adjusting an application window width according to an example;
Fig. 9B is a schematic diagram of adjusting an application window width according to another example;
Fig. 10A is a schematic diagram of a current display interface according to yet another example;
Fig. 10B is a schematic diagram of a current display interface according to yet another example;
Fig. 10C is a schematic diagram of a current display interface according to yet another example;
Fig. 11A is a schematic diagram of a current display interface according to yet another example;
Fig. 11B is a schematic diagram of a current display interface according to still another example;
Fig. 12 is a schematic diagram of adjusting an application window width according to yet another example;
Fig. 13 is a schematic diagram of adding an application window according to an example;
Fig. 14 is a schematic diagram of adding an application window according to another example;
Fig. 15A is a schematic diagram of switching a display interface according to an example;
Fig. 15B is a schematic diagram of switching a display interface according to another example;
Fig. 16A is a schematic diagram of an interface preview mode according to an example;
Fig. 16B is a schematic diagram of an interface preview mode according to another example;
Fig. 16C is a schematic diagram of an interface preview mode according to yet another example;
Fig. 17A is a schematic diagram of an application window without China Type Approval (CTA) authorization according to an example;
Fig. 17B is a schematic diagram of a pop-up window with CTA authorization according to an example;
Fig. 18 is a block diagram of an apparatus for displaying an application according to an example;
Fig. 19 is a schematic diagram of a desktop hierarchical relation of an in-vehicle terminal according to an example; and
Fig. 20 is a schematic block diagram of functions of a vehicle according to an example.

### DETAILED DESCRIPTION OF THE INVENTION

Examples will be described in detail here and shown in the accompanying drawings illustratively. When the following descriptions involve the accompanying drawings, unless otherwise specified, the same number in different accompanying drawings denotes the same or similar elements. The embodiments described in the following examples do not denote all possible embodiments consistent with the invention. On the contrary, the embodiments are merely instances of an apparatus and a method consistent with some aspects of the invention as detailed in the appended claims.

It is to be noted that all actions of obtaining signals, information or data in the invention are conducted under the premise of complying with corresponding data protection laws and policies of the current country and obtaining authorization from a corresponding apparatus owner.

With the technology development, an existing in-vehicle display screen has a function of split-screen display. An existing split-screen principle is to divide the entire display screen into different display zones by dividing pixel points on the display screen, and thus different application content can be displayed in the display zones respectively. However, a size and content of each display zone are generally fixed, which can hardly satisfy customized demand of users.

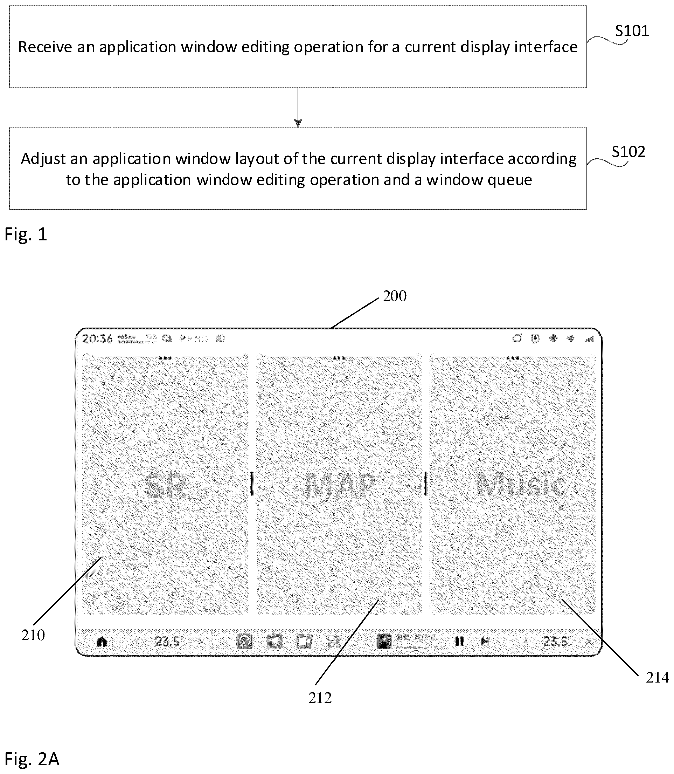

Fig. 1 is a flow diagram of a method for displaying an application according to an example. The method may be performed by an in-vehicle terminal. For instance, the in-vehicle terminal may be a smart phone, an intelligent wearable device, an in-vehicle terminal, etc. As shown in Fig. 1, the method for displaying an application may include S101 and S102.

In S101, an application window editing operation for a current display interface is received.

In the invention, the current display interface of the in-vehicle terminal includes n application windows. In response to determining that n>1, that is, the current display interface includes a plurality of application windows, the n application windows are arranged adjacent to each other in a transverse direction, that is, no gap is provided between the n application windows. In addition, the application windows are not in a cross-screen mode, and different application windows are configured to display different applications.

As shown in Fig. 2A, the current display interface 200 of the in-vehicle terminal includes three application windows (referred to as window 1 210, window 2 212 and window 3 214 from left to right) that are arranged adjacent to each other in the transverse direction. The window 1 210 is configured to display substitutional reality (SR). The window 2 212 is configured to display a map. The window 3 214 is configured to display music. The SR is virtual road condition information of a current position of a vehicle.

In addition, as shown in Fig. 2A, a display interface of the in-vehicle terminal includes a status bar located on a top of the display interface, an application startup bar located on a bottom of the display interface, and an effective zone located between the status bar and the application startup bar. The effective zone is configured to display the application window.

The application window editing operation may be a window removing operation, a window width adjusting operation, a window adding operation, a window full-screen display operation, and a window translating operation, etc.

In S102, an application window layout of the current display interface is adjusted according to the application window editing operation and a window queue.

In the invention, the window queue is configured for continuous adjacent arrangement of the n application windows in the current display interface. At least part of a zone of the window queue overlaps the display interface of the in-vehicle terminal, so as to ensure that the application windows in the window queue are displayed in the current display interface. That is, the display interface of the in-vehicle terminal is configured to display the application window in the window queue, and the n application windows are continuous in the window queue.

In addition, a status of the window queue is dynamically updated with change of the application window layout. The status of the window queue includes a length (that is, n) of the window queue and a window width. That is, through adjustment of a display interface layout in the in-vehicle terminal may lead to change of the length of the window queue and the application window width in the window queue. Serial numbers of the application windows in the window queue sequentially increase in a direction opposite to a starting point direction. A serial number of the application window, closest to a starting point of the window queue, of the n application windows is 1. The starting point direction is a direction towards the starting point of the window queue, close to a driver side, of the in-vehicle terminal. If the vehicle is a left-rudder vehicle, the starting point direction is horizontally leftward. If the vehicle is a right-rudder vehicle, the starting point direction is horizontally rightward. The drawings in the disclosure all take the condition that the vehicle is the left-rudder vehicle as an instance.

The application window layout may include display content (that is, which applications are displayed) and/or the window width. That is, the step that the application window layout of the current display interface is adjusted includes the following step that the display content of the current display interface is adjusted and/or the window width of the current display interface is adjusted. Adjustment of the window width and adjustment of the display content may lead to change of a number of windows in the current display interface.

The technical solution according to the examples of the invention can have the following beneficial effects: the in-vehicle terminal adjusts, in response to receiving the application window editing operation for the current display interface, the application window layout of the current display interface according to the application window editing operation and the window queue. The window queue is configured for continuous adjacent arrangement of the n application windows in the current display interface. The status of the window queue is dynamically updated with change of the application window layout of the current display interface. The at least part of the zone of the window queue overlaps the display interface of the in-vehicle terminal, so as to ensure that the application windows in the window queue are displayed in the current display interface. In this way, self-adaptive adjustment of display content and a display window size in the display interface can be implemented according to a user operation, and a use experience of a user can be improved. In addition, one or more application windows can be displayed in the display interface of the in-vehicle terminal, such that the display interface can have more display forms, and a use ratio of the display interface and a visual experience of the user can be improved. In addition, when split-screen display is conducted in the display interface, different applications can be separately displayed in each display window, which facilitates use.

In the invention, n≤3, and the application window width is d/3 or 2d/3. That is, the application window in the window queue and the application window in the current display interface have two sizes of d/3 and 2d/3. The application window width changes adaptively with layout change of the display interface, where d denotes a width of the current display interface.

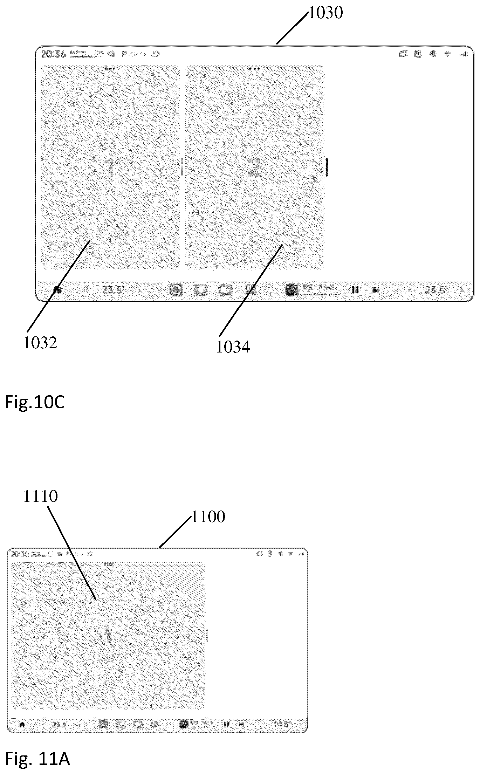

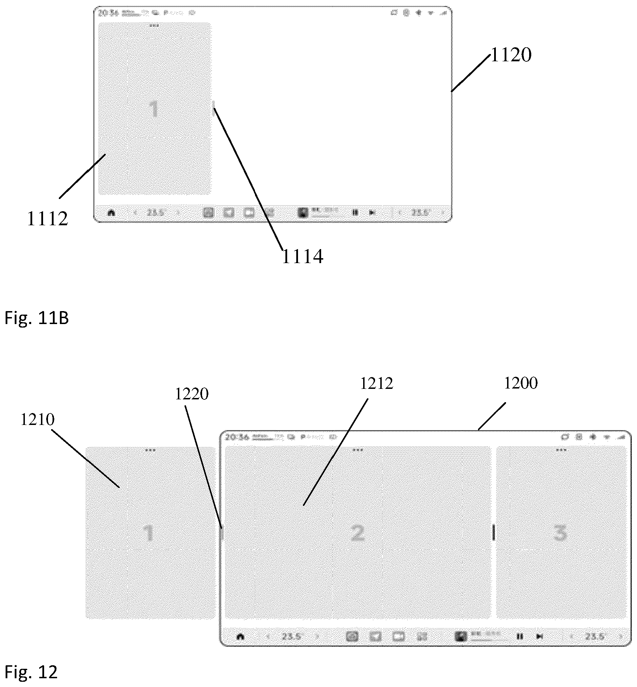

In one embodiment, the current display interface includes one application window. A width of the application window may be 2d/3 (as shown in Fig. 11A) or d/3 (as shown in Fig. 11B). In this case, a vacant window position away from the starting point exists in the current display interface, and a width of the vacant window position is (d-d1), where d1 denotes a width of the above application window.

In another embodiment, the current display interface includes two application windows. Widths of the two application windows may be both d/3 (as shown in Fig. 10C). In this case, a vacant window position away from the starting point exists in the current display interface, and a width of the vacant window position is d/3.

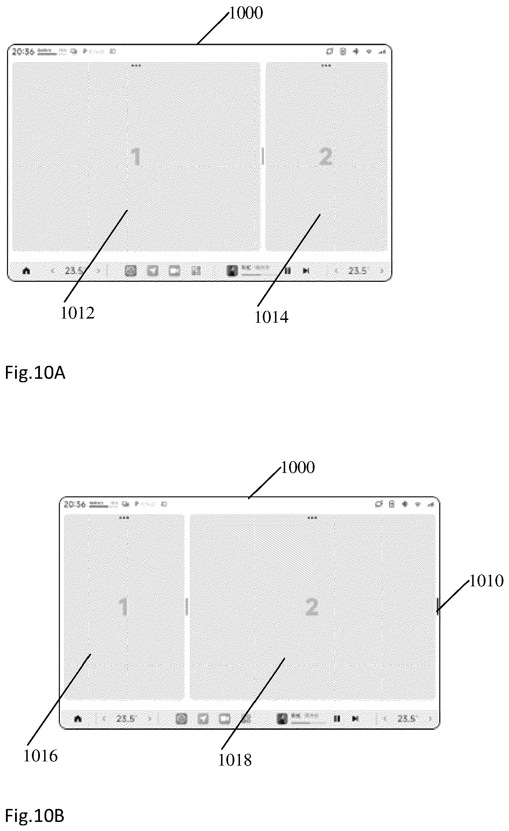

In yet another embodiment, the current display interface includes two application windows. Widths of the two application windows may be d/3 and 2d/3 respectively, and no vacant window position exists in the current display interface. The application window with the width of d/3 may be close to the starting point (as shown in Fig. 10A) or away from the starting point (as shown in Fig. 10B).

In yet another embodiment, as shown in Fig. 2A, the current display interface includes three application windows. Widths of the three application windows may be all d/3. In this case, no vacant window position exists in the current display interface.

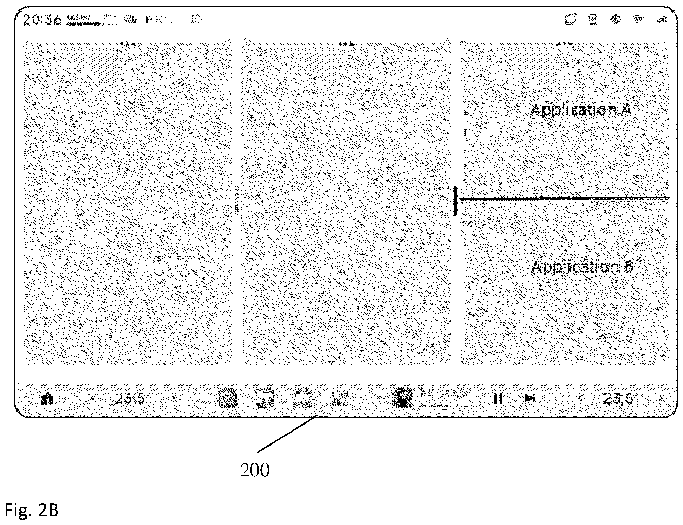

In yet another embodiment, as shown in Fig. 2B, the current display interface 200 includes n application windows. An nth application window in the current display interface includes two or more different application interfaces. In this case, no vacant window position exists in the current display interface.

The specific embodiment of the step that the application window layout of the current display interface is adjusted according to the application window editing operation and the window queue in S102 will be described in detail below. In the invention, the application window layout may be adjusted on the basis that a number of application windows adjusted is as small as possible, such that influence of adjustment of the application window layout on the window queue can be reduced while adjustment efficiency of the application window layout can be improved.

Specifically, in response to determining that the application window editing operation is the window removing operation, the application window layout of the current display interface may be adjusted according to the application window editing operation and the window queue through the following steps (a1)-(a5):
Step (a1): a to-be-removed window is determined in the current display interface according to the window removing operation.

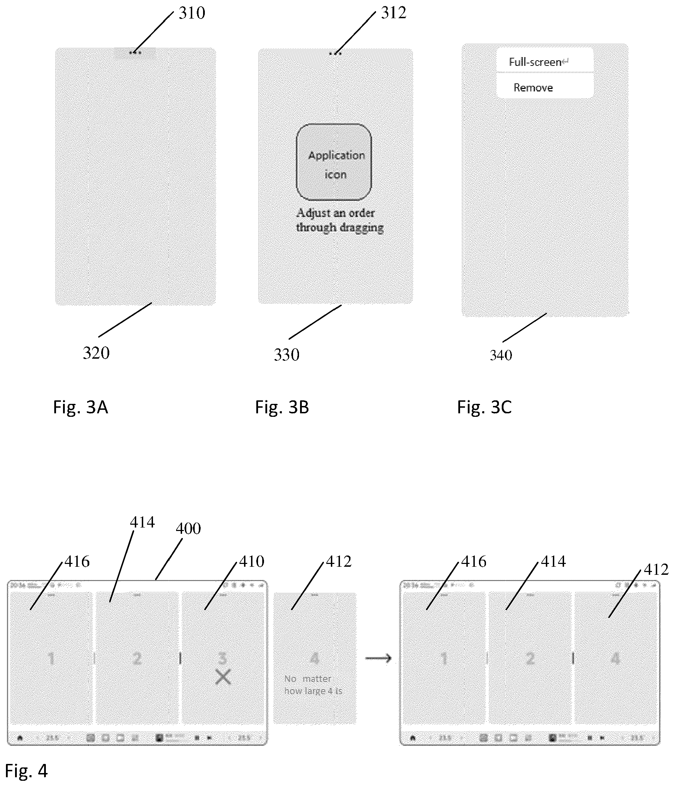

In the invention, the current display interface 200 further includes a window control 310, 312 (three points on the top of the application window as shown in Figs. 3A and 3B, respectively) configured on a top of each application window, 320, 330. A user may move, remove and full-screen display the application window where the window control is located through the window control. That is, the user may trigger operations such as window removal, window full-screen display and window movement through the window control.

In one embodiment, as shown in Fig. 3B, the user enables an application window 330 to be in a movable status by long-pressing a window control on a top of the corresponding application window, and then the user adjusts a display position of the application window in the current display interface by dragging the corresponding application window.

In another embodiment, as shown in Fig. 3C, the user enables an application window 340 to display a menu by clicking on the window control on the top of the corresponding application window. The menu includes two options of "full screen" and "remove". The user implements window editing by selecting a corresponding option through a clicking operation. Specifically, when the user selects the "full screen" option, the current display interface displays the application window in a full-screen mode. When the user selects the "remove" option, the application window is removed from the current display interface.

Step (a2): a to-be-removed window n is removed from the current display interface.

Step (a3): whether an (n+1)th application window exists is determined.

Step (a4): in response to determining that the (n+1)th application window exists, an application window having a serial number greater than that of the to-be-removed window n in the window queue is translated sequentially in the starting point direction, and is displayed in the current display interface.

In response to determining that the (n+1)th application window does not exist, it is indicated that the current display interface includes an end window of the window queue, that is, no application window that may be added to a freed-up vacant window position in the current display interface exists in the window queue. In this case, adjustment of the display content of the current display interface is completed.

Step (a5): in response to determining that n=1 and a to-be-removed window is not located at a starting point of the window queue, the current display interface is switched to a display interface previous to the current display interface.

In the invention, the application windows in the window queue constitute a plurality of continuous display interfaces, the previous display interface is an interface, close to the starting point, of adjacent interfaces of the current display interface, and a subsequent display interface is an interface, away from the starting point, of adjacent interfaces of the current display interface.

When the number of application windows in the current display interface is 1 and the to-be-removed window is not located at the starting point of the window queue, it is indicated that the application window in the current display interface is the to-be-removed window and the current display interface further has the previous display interface. In this case, a display interface of a display device may be switched from the current display interface to the display interface previous to the current display interface.

The specific embodiment of the steps that the application window having the serial number greater than that of the to-be-removed window n in the window queue is translated sequentially in the starting point direction and is displayed in the current display interface in step (a4) will be described in detail below. Specifically, the specific embodiment may be implemented through the following steps (a41) and (a42):
Step (a41): a first width of the (n+1)th application window and a second width of the to-be-removed window are obtained.
Step (a42): a translating strategy is determined according to a comparison result of the first width and the second width.

Then, the application window having the serial number greater than that of the to-be-removed window n in the window queue may be translated sequentially in the starting point direction according to the translating strategy.

The specific embodiment of the step that the translating strategy is determined according to the comparison result of the first width and the second width in step (a42) will be described in detail below.

In one embodiment, in response to determining that the first width of the (n+1)th application window is greater than the second width of the to-be-removed window, the translating strategy is to reduce the first width of the (n+1)th application window to the second width of the to-be-removed window, translate the (n+1)th application window in the starting point direction, and display the (n+1)th application window in the current display interface.

For instance, as shown in Fig. 4, n=3, and the current display interface 400 includes three application windows each with a width of d/3. Accordingly, the width of the to-be-removed window is also d/3, where the to-be-removed window is the window 3 410. If a first width of a fourth application window (that is, window 4, 412) is 2d/3, which is greater than the second width of the to-be-removed window, the translating strategy is to reduce the first width of the window 4 to d/3, translate the window 4 in the starting point direction, and display the window 4 in the current display interface.

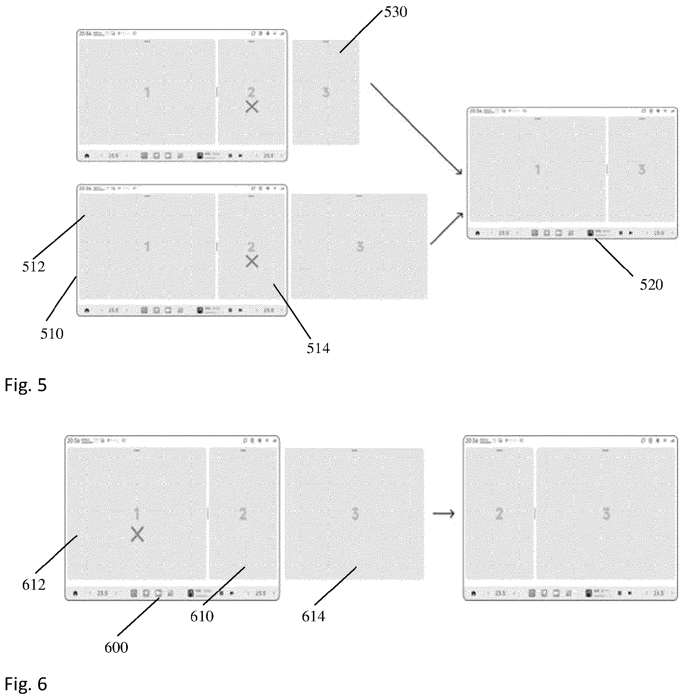

Further, for instance, as shown in the current display interface 510 at a left bottom in Fig. 5, n=2, and the current display interface includes two application windows. A width of the application window 512 close to the starting point is 2d/3, and a width of an application window 514 away from the starting point is d/3. The to-be-removed window is the window 2. A width of a third application window (that is, window 3) is 2d/3, which is greater than the width of the to-be-removed window. In this case, the translating strategy is to reduce the width of the window 3530 to d/3, translate the window 3 in the starting point direction, and display the window 3 in the current display interface 520.

In another embodiment, in response to determining that the first width of the (n+1)th application window is equal to the second width of the to-be-removed window, the translating strategy is to keep a width of the (n+1)th application window unchanged, translate the (n+1)th application window in the starting point direction, and display the (n+1)th application window in the current display interface.

For instance, as shown in Fig. 4, n=3, and the current display interface includes three application windows 410, 414, 416each with a width of d/3. Accordingly, the width of the to-be-removed window is also d/3, where the to-be-removed window is the window 3. If a first width of a fourth application window (window 4) is d/3, which is equal to the second width of the to-be-removed window, the translating strategy is to keep the width of the window 4 unchanged, translate the window 4 in the starting point direction, and display the window 4 in the current display interface.

Further, for instance, as shown in the current display interface at a left top in Fig. 5, n=2, and the current display interface includes two application windows. A width of the application window close to the starting point is 2d/3, and a width of an application window away from the starting point is d/3. The to-be-removed window is the window 2. A width of a third application window (that is, window 3) is d/3, which is equal to the width of the to-be-removed window. In this case, the translating strategy is to keep the width of the window 3 unchanged, translate the window 3 in the starting point direction, and display the window 3 in the current display interface.

Further, for instance, as shown in Fig. 6, n=2, and the current display interface 600 includes two application windows 610, 612. A width of the application window 612 close to the starting point is 2d/3, and a width of an application window 610 away from the starting point is d/3. The to-be-removed window is the window 1 with a width of 2d/3. A width of a third application window 614 (that is, window 3) is 2d/3, which is equal to the width of the to-be-removed window. In this case, the translating strategy is to keep the width of the window 3 unchanged, translate the window 3 in the starting point direction, and display the window 3 in the current display interface.

In yet another embodiment, in response to determining that the first width of the (n+1)th application window is smaller than the second width of the to-be-removed window and an (n+2)th application window exists, the translating strategy is to keep a width of the (n+1)th application window unchanged, translate the (n+1)th application window in the starting point direction, and display the (n+1)th application window in the current display interface; and translate the (n+2)th application window with a width equaling a difference between the second width and the first width in the starting point direction, and display the (n+2)th application window in the current display interface. No matter how wide the (n+2)th application window is, the (n+2)th application window with a width equaling the difference between the second width and the first width is translated in the starting point direction, and is displayed in the current display interface.

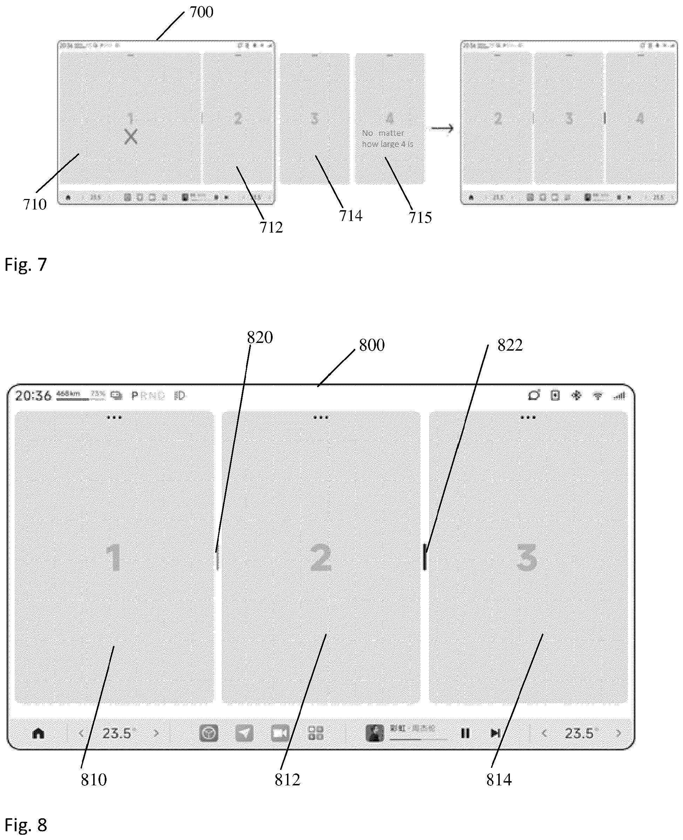

For instance, as shown in Fig. 7, the current display interface 700 includes two application windows 710, 712. A width of the application window 710 close to the starting point is 2d/3, and a width of an application window 712 away from the starting point is d/3. The to-be-removed window is the window 1 with a width of 2d/3. A width of a third application window (that is, window 3 714) is d/3, which is smaller than the width of the to-be-removed window. Moreover, a fourth application window (that is, window 4 715) exists. In this case, the translating strategy is to keep the width of the window 3 unchanged, translate the window 3 in the starting point direction, and display the window 3 in the current display interface; and translate the window 4 with a width (that is, d/3) equaling a difference between the second width and the first width in the starting point direction, and display the window 4 in the current display interface. No matter how wide the window 4 is, the window 4 is translated in the starting point direction by the width of d/3, and is displayed in the current display interface.

In yet another embodiment, in response to determining that the first width of the (n+1)th application window is smaller than the second width of the to-be-removed window and the (n+2)th application window does not exist, the translating strategy is to keep a width of the (n+1)th application window unchanged, translate the (n+1)th application window in the starting point direction, and display the (n+1)th application window in the current display interface.

In the invention, in response to determining that the first width of the (n+1)th application window is smaller than the second width of the to-be-removed window and the (n+2)th application window does not exist, a width of the (n+1)th application window may be kept unchanged, and the (n+1)th application window may be translated in the starting point direction and displayed in the current display interface. Then, the display interface further includes the vacant window position. The (n+2)th application window does not exist, that is, the (n+1)th application window is an end window of the window queue, such that the vacant window position is no longer filled.

In addition, the current display interface further includes width adjusting controls separately configured between every two adjacent application windows. The width adjusting control is configured to adjust a width of the application window. For instance, if the starting point direction is from right to left, the width adjusting control is configured to adjust a width of an application window on a left side of the width adjusting control. The width of the corresponding application window is adjusted by dragging or clicking on the width adjusting control (including single-clicking and double-clicking, for instance, single-clicking on the width adjusting control to increase the width of the corresponding application window, and double-clicking on the width adjusting control to decrease the width of the corresponding application window). The width of the application window may be switched between d/3 and 2d/3.

For instance, as shown in Fig. 8, the current display interface 800 includes the window 1 810, the window 2 812, and the window 3 814. A width adjusting control (vertical bar) 820 is configured between the window 1 and the window 2, and a width adjusting control (vertical bar) 822 is configured between the window 2 and the window 3. The width adjusting control between the window 1 and the window 2 is configured to adjust the width of the window 1, and the width adjusting control between the window 2 and the window 3 is configured to adjust the width of the window 2.

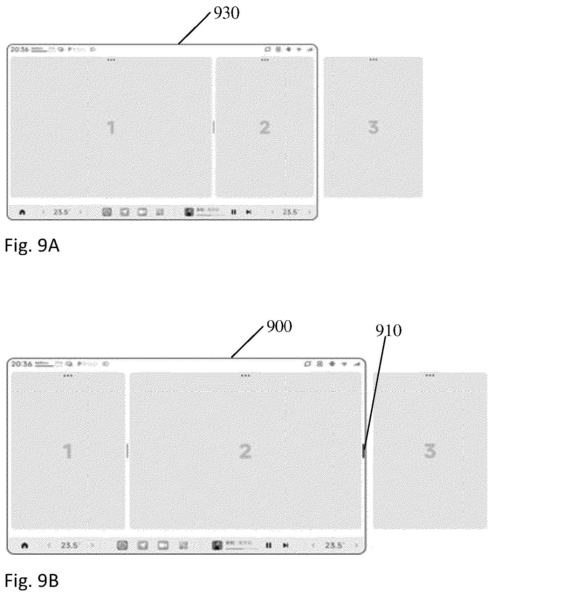

In addition, in response to determining that the width of an application window away from the starting point is 2d/3, the current display interface further includes a width adjusting control configured on a second vertical edge, away from the starting point, of the current display interface. As shown in Figs. 9B and 10B, the current display interface 900, 1000 (respectively) further includes a width adjusting control 910, 1010 (respectively) configured on a right edge (that is, the second vertical edge) of the current display interface.

The window width adjusting operation may be a first control operation for any one of the width adjusting controls in the current display interface. The first control operation may be a dragging operation, a clicking operation, etc.

In response to determining that the application window editing operation is the window width adjusting operation, the application window layout of the current display interface may be adjusted according to the application window editing operation and the window queue as follows: the window width of the current display interface is at least adjusted according to the first control operation and the window queue.

The specific embodiment of the step that the window width of the current display interface is at least adjusted according to the first control operation and the window queue will be described in detail below.

In one embodiment, n=3, and the widths of the n application windows each are d/3. In response to determining that the first control operation is to drag any one of the width adjusting controls away from the starting point, a width of a target application window is stretched to 2d/3. An nth application window in the current display interface is pushed to a display interface subsequent to the current display interface. The target application window is an application window, close to the starting point, of application windows at two ends of the width adjusting control targeted by the first control operation.

In the invention, in response to determining that the number of application windows in the current display interface is 3, widths of the three application windows in the current display interface are all d/3. In this case, the current display interface includes two width adjusting controls. Any one of the width adjusting controls is dragged away from the starting point, and the width of the target application window may be stretched to 2d/3. In this case, the nth application window in the current display interface is pushed out of the display interface of the in-vehicle terminal.

For instance, the current display interface 800 is as shown in Fig. 8. The width adjusting control 820 between the window 1 and the window 2 is dragged rightward, such that the width of the window 1 810 is increased. In this case, the width of the window 1 is adjusted from d/3 to 2d/3, and the window 3 is pushed out of the current display interface, such that the display interface 930 shown in Fig. 9A is obtained.

Further, for instance, the current display interface is as shown in Fig. 8. The width adjusting control 822 between the window 2 and the window 3 is dragged rightward, such that the width of the window 2 812 is increased. In this case, the width of the window 2 is adjusted from d/3 to 2d/3, and the window 3 814 is pushed out of the current display interface, such that the display interface 900 shown in Fig. 9B is obtained.

In another embodiment, n=2, the width of the n application windows is d/3 or 2d/3, and an application window with a width of 2d/3 in the current display interface is close to the starting point. In this case, in response to determining that the first control operation is to drag a width adjusting control in the starting point direction and the (n+1)th application window exists, a width of the application window close to the starting point is reduced to d/3, and the application window, away from the starting point, of the current display interface and the (n+1)th application window are translated in the starting point direction by a width of d/3 and are displayed in the current display interface.

In the invention, when the number of application windows in the current display interface is 2 and an application window with a width of 2d/3 in the current display interface is close to the starting point, the current display interface includes one width adjusting control. The width of the application window close to the starting point may be reduced to d/3 by dragging the width adjusting control in the starting point direction, and then whether the (n+1)th application window exists may be determined. In response to determining that the (n+1)th application window exists, the (n+1)th application window is added to a new vacant window position by a width of d/3. In response to determining that the (n+1)th application window does not exist, a window filling operation is not required.

For instance, as shown in Fig. 10A, the current display interface 1000 includes the window 1 1012 with the width of 2d/3 close to the starting point and the window 2 1014 with the width of d/3 away from the starting point. In this case, the width of the window 1 may be adjusted to d/3 by dragging the width adjusting control between the window 1 and the window 2 leftward. The window 1 is not a rightmost application window in the current display interface, so the window 2 is moved leftward to be adjacent to the window 1. In this case, the display interface includes a new vacant window position with the width of d/3 adjacent to a right edge of the display interface. In response to determining that the (n+1)th application window "window 3" exists, the window 3 is added to the new vacant window position, and the display interface 800 shown in Fig. 8 is obtained. In response to determining that the (n+1)th application window does not exist, the window filling operation is not required, and the display interface 1030 shown in Fig. 10C is obtained.

In yet another embodiment, n=2, the widths of the n application windows are d/3 and 2d/3 respectively, and the application window with the width of d/3 in the current display interface is close to the starting point. In this case, the window width of the current display interface may be at least adjusted according to the first control operation and the window queue as follows:

In response to determining that the first control operation is to drag a width adjusting control close to the starting point away from the starting point, a width of a first application window in the current display interface is stretched to 2d/3, and a width of a second application window in the current display interface is reduced to d/3.

In the invention, when the number of application windows in the current display interface is 2 and the application window with the width of d/3 in the current display interface is close to the starting point, the current display interface includes two width adjusting controls. The width of the first application window in the current display interface may be stretched to 2d/3 by dragging the width adjusting control between the two application windows away from the starting point. That is, the width of the application window close to the starting point is stretched to 2d/3, and a width of the second application window in the current display interface is reduced to d/3.

As shown in Fig. 10B, the current display interface 1000 includes the window 1 1016 with the width of d/3 close to the starting point and the window 2 1018 with the width of 2d/3 away from the starting point. In this case, the width of the window 1 may be adjusted to 2d/3 by dragging the width adjusting control 1010 between the window 1 and the window 2 leftward, In this case, the sum of the width of the window 1 and the width of the window 2 is greater than d. In order to make the number of application windows adjusted as small as possible, the width of the window 2 may be adjusted to d/3, such that the display interface 1000 shown in Fig. 10A is obtained.

In response to determining that the first control operation is to drag a width adjusting control away from the starting point in the starting point direction, the width of an application window away from the starting point is reduced to d/3. In response to determining that the (n+1)th application window exists, the (n+1)th application window is translated in the starting point direction by the width of d/3 and is displayed in the current display interface.

In the invention, when the number of application windows in the current display interface is 2 and an application window with a width of d/3 in the current display interface is close to the starting point, the current display interface includes two width adjusting controls. The width of an application window away from the starting point may be reduced to d/3 by dragging the width adjusting control (the width adjusting control on the second vertical edge) away from the starting point in the starting point direction, and then whether the (n+1)th application window exists may be determined. In response to determining that the (n+1)th application window exists, the (n+1)th application window is translated in the starting point direction by the width of d/3 and displayed in the current display interface. In response to determining that the (n+1)th application window does not exist, the filling operation is not required. In this case, the display interface includes a vacant window position with the width of d/3.

For instance, as shown in Fig. 10B, the current display interface 1000 includes the window 1 1016 with the width of d/3 close to the starting point and the window 2 1018 with the width of 2d/3 away from the starting point. In this case, the width of the window 2 may be adjusted to d/3 by dragging the width adjusting control between the window 2 and a right edge of the current display interface leftward. The window 2 is a rightmost application window in the current display interface, so a window leftward-moving operation is not required. In this case, the display interface includes a new vacant window position with the width of d/3 adjacent to the right edge of the display interface. In this case, in response to determining that the (n+1)th application window "window 3" exists, the window 3 is added to the new vacant window position, and the display interface shown in Fig. 8 is obtained. In response to determining that the (n+1)th application window does not exist, the window filling operation is not required, and the display interface 1030 shown in Fig. 10C is obtained.

In yet another embodiment, n=2, and the widths of the two application windows in the current display interface both are d/3. That is, in response to determining that the first control operation is to drag any one of the width adjusting controls away from the starting point, the width of the target application window is stretched to 2d/3.

In the invention, in response to determining that the number of application windows in the current display interface is 2 and the vacant window position exists in the current display interface, it is indicated that the current display interface includes two application windows each with a width of d/3 and one vacant window position with a width of d/3, and the current display interface includes two width adjusting controls. In this case, in response to determining that any one of the width adjusting controls is dragged away from the starting point, the width of the target application window may be adjusted to 2d/3, in this case, the sum of the width of the target application window adjusted and a width of another application window is just equal to d, and window pushing and window filling operations are not required.

As shown in Fig. 10C, the current display interface 1030 includes the window 1 1032 with the width of d/3 and the window 2 1034 with the width of d/3. In this case, the width of the window 2 may be adjusted to 2d/3 by dragging the width adjusting control at a right side of the window 2 leftward, and the display interface 1000 shown in Fig. 10B may be obtained. Alternatively, the width of the window 1 may be adjusted to 2d/3 by dragging the width adjusting control between the window 1 and the window 2 leftward, and the display interface 1000 shown in Fig. 10A may be obtained.

In yet another embodiment, in response to determining n=1 (that is, the current display interface includes one width adjusting control): when a width of the application window is 2d/3, if the first control operation is to drag a width adjusting control in the starting point direction, the width of the application window is adjusted to 2d/3; and when a width of the application window is d/3, if the first control operation is to drag a width adjusting control away from the starting point, the width of the application window is adjusted to d/3.

For instance, as shown in Fig. 11A, the current display interface 1100 includes the window 1 1110 with the width of 2d/3. The width of the window 1 may be adjusted to d/3 by dragging the width adjusting control at the right side of the window 1 leftward, such that the display interface 1120 shown in Fig. 11B is obtained.

Further, for instance, as shown in Fig. 11B, the current display interface 1120 includes the window 1 1112 with the width of d/3. The width of the window 1 may be adjusted to 2d/3 by dragging the width adjusting control 1114 at the right side of the window 1 rightward, such that the display interface 1100 shown in Fig. 11A is obtained.

In addition, in response to determining that n=3 and the widths of the n application windows each are d/3, when the first application window in the current display interface is located at a starting point of the window queue, the width adjusting control close to the starting point is further configured to adjust a width of the application window, away from the starting point, of the application windows at two ends of the width adjusting control. That is, when the first application window in the current display interface is located at the starting point of the window queue, the width adjusting control between the first application window and the second application window may be configured to adjust the width of the first application window and adjust the width of the second application window.

For instance, as shown in Fig. 8, in response to determining that the leftmost application window "window 1" 810 in the current display interface 800 is a start window of the window queue, the width adjusting control between the window 1 and the window 2 may be configured to adjust the width of the window 1 and further adjust the width of the window 2.

In this case, the step that the window width of the current display interface is at least adjusted according to the first control operation and the window queue may further include the following steps:
in response to determining that the first control operation is to drag a width adjusting control close to the starting point in the starting point direction, the width of the second application window in the current display interface is adjusted to 2d/3. The first application window is temporarily pushed out of the current display interface in the starting point direction.

For instance, as shown in Fig. 8, the width adjusting control 820 between the window 1 810 and the window 2 812 is dragged leftward, such that the width of the window 2 is increased. In this case, the width of the window 2 is adjusted from d/3 to 2d/3, and the window 1 is temporarily pushed out of the current display interface, such that the display interface 1200 shown in Fig. 12 is obtained.

In response to determining that the number of application windows in the current display interface is 3 and the first control operation is to drag a width adjusting control close to the starting point in the starting point direction, the width of the second application window in the current display interface is adjusted to 2d/3, and the first application window in the current display interface is temporarily pushed out of the current display interface, such that frustration of the user can be reduced.

After the first application window in the current display interface is temporarily pushed out of the current display interface, the method may further include the following two steps:
the width adjusting control is displayed on a first vertical edge close to the starting point of the current display interface; and
in response to receiving a second control operation for the width adjusting control on the first vertical edge, the width of the second application window in the current display interface is adjusted to d/3, and the first application window temporarily pushed out of the current display interface is translated back to the current display interface.

In the invention, the second control operation is to drag the width adjusting control on the first vertical edge away from the starting point. In response to receiving the second control operation for the width adjusting control on the first vertical edge, the width of the second application window in the current display interface is adjusted to d/3, such that a window position closest to the starting point may be vacated. Then, the first application window temporarily pushed out of the display interface may be translated back to the vacated window position.

For instance, as shown in Fig. 12, after the window 1 1210 is temporarily pushed out of the current display interface 1200, the width adjusting control 1220 is displayed between the window 2 1212 and a left edge of the current display interface. When the width adjusting control is dragged rightward, the width of the window 2 is adjusted to d/3, such that a window position adjacent to the left edge of the current display interface may be vacated. Then, the window 1 temporarily pushed out may be translated back to the vacated window position, and the display interface 800 shown in Fig. 8 may be obtained.

In response to determining that the application window editing operation is the window adding operation, the application window layout of the current display interface may be adjusted according to the application window editing operation and the window queue as follows:
a to-be-added window is added to the current display interface at least according to existence of the vacant window position in the current display interface, where the to-be-added window is an application window corresponding to the window adding operation.

The specific embodiment of the step that the to-be-added window is added to the current display interface at least according to the existence of the vacant window position in the current display interface will be described in detail below.

In one embodiment, in response to determining that the vacant window position exists in the current display interface, a width of the to-be-added window is adjusted according to a width of the vacant window position and the width of the to-be-added window, and then the to-be-added window is added to the vacant window position.

Specifically, in response to determining that the width of the to-be-added window is smaller than or equal to that of the vacant window position, the to-be-added window is added to the vacant window position according to the original width. In response to determining that the width of the to-be-added window is greater than that of the vacant window position, the width of the to-be-added window is reduced to the width of the vacant window position, and then the to-be-added window is added to the vacant window position.

In another embodiment, n=1, the width of the application window is d/3 or 2d/3, and the width of the to-be-added window is d/3 by default. In this case, the to-be-added window may be added to the current display interface at least according to the existence of the vacant window position in the current display interface as follows:
the to-be-added window is added to the vacant window position adjacent to an application window of an original display interface.

In yet another embodiment, n=2, and the widths of the n application windows are selected to be d/3 and 2d/3. In this case, the to-be-added window may be added to the current display interface at least according to the existence of the vacant window position in the current display interface as follows:

in response to determining that no vacant window position exists in the current display interface, a width of an application window with a width of 2d/3 in the current display interface is reduced to d/3, 1 is added to n, and the to-be-added window with a width of d/3 is added as the nth application window in the current display interface to the current display interface; and in response to determining that the vacant window position exists in the current display interface, the to-be-added window is added to the vacant window position of an original display interface.

In the invention, in response to determining that the current display interface includes two application windows and widths of the two application windows are d/3 and 2d/3 respectively, the width of the application window with the width of 2d/3 in the current display interface is reduced to d/3. No matter how large the to-be-added window is, the to-be-added window is added by the width of d/3 to the nth application window in the current display interface.

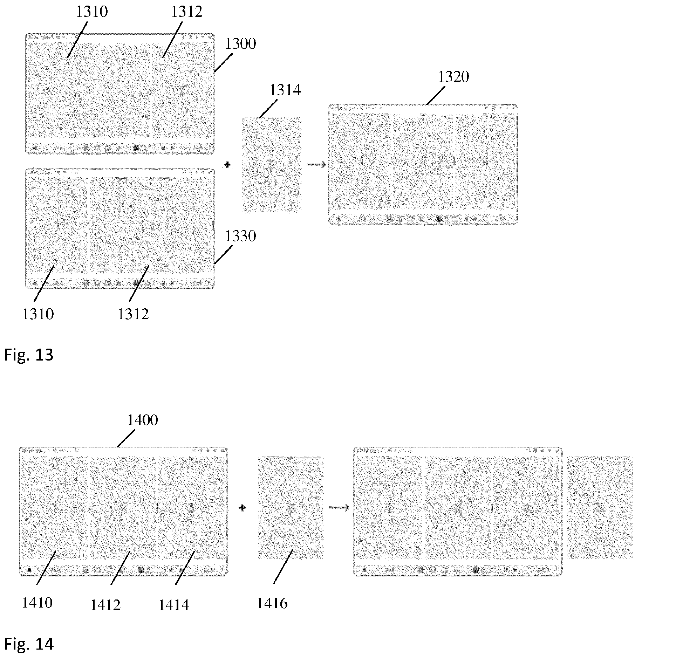

For instance, as shown in a left top in Fig. 13, the current display interface 1300 includes the window 1 1310 and the window 2 1312, where the width of the window 1 is 2d/3, the width of the window 2 is d/3, and the to-be-added window is the window 3 1314. In this case, the width of the window 1 may be reduced to d/3, and after the window 3 is added to the window 2 by the width of d/3, the display interface 1320 at a right side of Fig. 13 may be obtained.

Further, for instance, as shown in a left bottom in Fig. 13, the current display interface 1330 includes the window 1 1310 and the window 2 1312, where the width of the window 1 is d/3, the width of the window 2 is 2d/3, and the to-be-added window is the window 3. In this case, the width of the window 2 may be reduced to d/3, and after the window 3 is added to the window 2 by the width of d/3, the display interface 1320 at the right side of Fig. 13 may be obtained.

In another embodiment, n=3, and the widths of the n application windows each are d/3. In this case, the to-be-added window may be added to the current display interface at least according to the existence of the vacant window position in the current display interface as follows: the to-be-added window is added by the width of d/3 to a position of the nth application window in the current display interface, where an original nth application window in the current display interface is pushed to a display interface subsequent to the current display interface.

In the invention, in response to determining that the current display interface includes three application windows and widths of the three application windows are all d/3, no vacant window position exists in the current display interface. In this case, no matter how large the to-be-added window is, the to-be-added window is added by the width of d/3 to the position of the nth application window in the current display interface, where the original nth application window in the current display interface is pushed to the display interface subsequent to the current display interface.

For instance, as shown in Fig. 14, the current display interface 1400 includes the window 11410, the window 2 1412, and the window 3 1414, the widths of the three windows are all d/3, and the to-be-added window is the window 4 1416. In this case, no matter how large the window 4 is, the window 4 is added by the width of d/3 to the position of the window 3, such that the window 3 is pushed out of the current display interface.

In addition to adjusting the application window layout of the display interface in the in-vehicle terminal, the entire display interface may be switched. In the invention, interface switching may be conducted in various modes. In one embodiment, interface switching may be conducted through gestures or an interface switching control configured on the display interface in the current display interface.

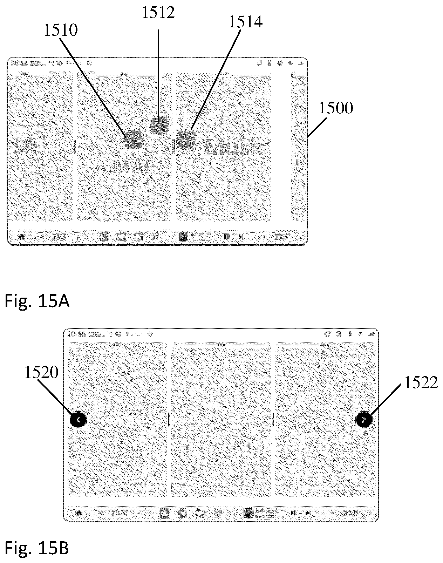

Specifically, interface switching may be conducted by swiping leftward and rightward on the display interface with gestures. For instance, when the display interface is swiped leftward by a preset distance and a next interface exists, in response to detecting a release operation, the current display interface is switched to the next interface. When the display interface is swiped rightward by a preset distance and a previous interface exists, in response to detecting a release operation, the current display interface is switched to the previous interface. As shown in Fig. 15A, the current display interface 1500 is swiped with three fingers 1510, 1512, 1514.

In a swiping process, the display interface moves along with a hand. When a swipe distance is smaller than a size of the display interface, or no corresponding adjacent interface exists, the display interface moves along with the hand, and the current display interface is returned to after the hand is released.

When the user clicks on any position in an effective zone of the current display interface, an interface switching control (such as a page turning key 1520, 1522 as shown in Fig. 15B) is displayed in the current display interface, and the user conducts interface switching through the interface switching control.

In yet another embodiment, interface switching may be conducted in an interface preview mode. The interface preview mode may be entered by clicking on a HOME key in the current display interface by user, such that the interface may be viewed and switched.

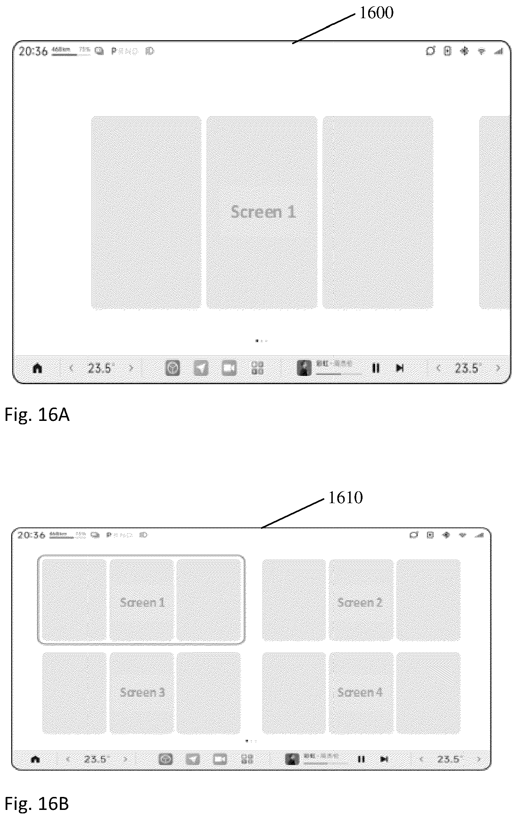

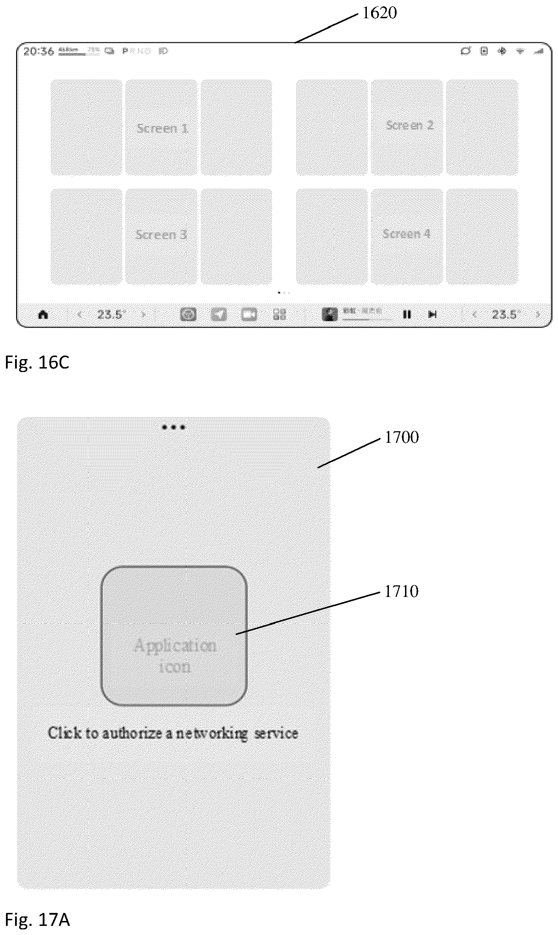

In the interface preview mode, each interface may be displayed in different arrangement modes, for instance, in a straight-line shape (as shown in Fig. 16A 1600), a zigzag shape with the current display interface highlighted (as shown in Fig. 16B 1610), and a zigzag shape without the current display interface highlighted (as shown in Fig. 16C 1620). The user may select a to-be-switched interface through a clicking operation.

When each interface is arranged in a straight-line shape, if there are a plurality of interfaces, a paging indicator may be displayed at a bottom, and the user may preview different interfaces by sliding leftward and rightward.

In addition, when the user conducts interface switching through a non-gesture operation, gesture switching teaching may be conducted. When the user finishes the teaching procedure once, gesture switching teaching no longer appears.

For instance, when the interface preview mode is exited, if the current display interface is inconsistent with that when the interface preview mode is entered, a reverse three-finger swipe teaching may appear, which may prompt the user to return to the display interface previous to the current display interface through gestures.

Further, for instance, after the user conducts interface switching through the interface switching control, the reverse three-finger swipe teaching appears, which prompts the user to return to the display interface previous to the current display interface through gestures.

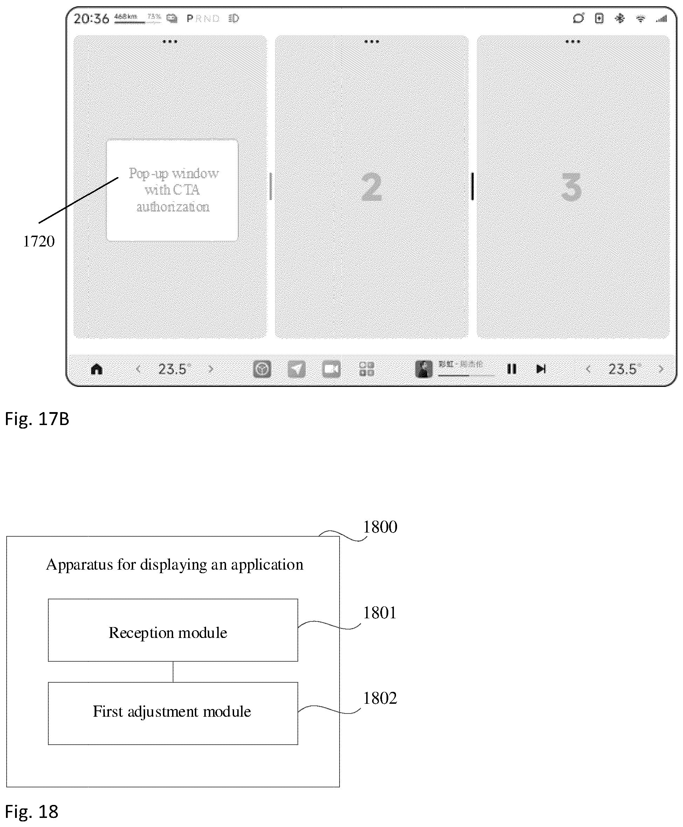

In addition, after an application is downloaded, the application may be used after passing the China Type Approval (CTA) of the Ministry of Industry and Information Technology. Thus, if an application without CTA authorization exists in the application window of the current display interface 1700, as shown in Fig. 17A, an icon 1710 of the corresponding application and a prompt message "Click to authorize a networking service" may be displayed in the application window. When the user clicks on the application window, a pop-up window 1720 with CTA authorization may be provided (as shown in Fig. 17B).

In one possible embodiment, in response to determining that the application window editing operation is the window translating operation, the application window layout of the current display interface may be adjusted according to the application window editing operation and the window queue through a plurality of embodiments. In one embodiment, an application window position adjusting button is triggered to suspend a to-be-adjusted application window above the window queue, the to-be-adjusted application window is dragged to a to-be-adjusted position, and original application windows are sequentially arranged backwards along the window queue in a direction opposite to the starting point direction after position determination.

In another possible embodiment, a to-be-adjusted application window is dragged to an edge position of the current display interface, another display interface adjacent to the current display interface is activated, and reordering is conducted in an application window of a new display interface.

Fig. 18 is a block diagram of an apparatus for displaying an application according to an example. The apparatus 200 is performed by an in-vehicle terminal. A current display interface of the in-vehicle terminal includes n application windows, where n≥1. In response to determining n>1, the n application windows are arranged adjacent to each other in a transverse direction. With reference to Fig. 18, the apparatus 1800 includes:
a reception module 1801 configured to receive an application window editing operation for the current display interface; and
a first adjustment module 1802 configured to adjust an application window layout of the current display interface according to the application window editing operation and a window queue.

The window queue is configured for continuous adjacent arrangement of the n application windows. A status of the window queue is dynamically updated with change of the application window layout. Serial numbers of the application windows in the window queue sequentially increase in a direction opposite to a starting point direction. A serial number of the application window, closest to a starting point of the window queue, of the n application windows is 1. The starting point direction is a direction towards the starting point of the window queue, close to a driver side, of the in-vehicle terminal.

At least part of a zone of the window queue overlaps a display interface of the in-vehicle terminal, so as to ensure that the application windows in the window queue are displayed in the current display interface.

The technical solution according to the examples of the invention can have the following beneficial effects: the in-vehicle terminal adjusts, in response to receiving the application window editing operation for the current display interface, the application window layout of the current display interface according to the application window editing operation and the window queue. The window queue is configured for continuous adjacent arrangement of the n application windows in the current display interface. The status of the window queue is dynamically updated with change of the application window layout of the current display interface. The at least part of the zone of the window queue overlaps the display interface of the in-vehicle terminal, so as to ensure that the application windows in the window queue are displayed in the current display interface. In this way, self-adaptive adjustment of display content and a display window size in the display interface can be implemented according to a user operation, and a use experience of a user can be improved. In addition, one or more application windows can be displayed in the display interface of the in-vehicle terminal, such that the display interface can have more display forms, and a use ratio of the display interface and a visual experience of the user can be improved. In addition, when split-screen display is conducted in the display interface, different applications can be separately displayed in each display window, which facilitates use.

Optionally, the application window editing operation is a window removing operation.

The first adjustment module 1802 includes:
a first determination sub-module configured to determine a to-be-removed window in the current display interface according to the window removing operation;
a removal sub-module configured to remove the to-be-removed window n from the current display interface;
a second determination sub-module configured to determine whether an (n+1)th application window exists; and
a first translating sub-module configured to translate, in response to determining that the (n+1)th application window exists, an application window having a serial number greater than that of the to-be-removed window n in the window queue sequentially in the starting point direction, and display the application window in the current display interface.

Optionally, the first translating sub-module includes:
an obtaining sub-module configured to obtain a first width of the (n+1)th application window and a second width of the to-be-removed window; and
a third determination sub-module configured to determine a translating strategy according to a comparison result of the first width and the second width.

Optionally, the third determination sub-module includes:
a fourth determination sub-module configured to determine, in response to determining that the first width is greater than the second width, the translating strategy to reduce the first width of the (n+1)th application window to the second width, translate the (n+1)th application window in the starting point direction, and display the (n+1)th application window in the current display interface.

Optionally, the third determination sub-module includes:
a sixth determination sub-module configured to determine, in response to determining that the first width is smaller than the second width and an (n+2)th application window exists, the translating strategy to keep a width of the (n+1)th application window unchanged, translate the (n+1)th application window in the starting point direction, and display the (n+1)th application window in the current display interface; and translate the (n+2)th application window in the starting point direction by a width equaling a difference between the second width and the first width, and display the (n+2)th application window in the current display interface; and
a seventh determination sub-module configured to determine, in response to determining that the first width is smaller than the second width and the (n+2)th application window does not exist, the translating strategy to keep a width of the (n+1)th application window unchanged, translate the (n+1)th application window in the starting point direction, and display the (n+1)th application window in the current display interface.

Optionally, the third determination sub-module includes:
an eighth determination sub-module configured to determine, in response to determining that the first width is equal to the second width, the translating strategy to keep a width of the (n+1)th application window unchanged, translate the (n+1)th application window in the starting point direction, and display the (n+1)th application window in the current display interface.

Optionally, the application window editing operation is a window removing operation.

The adjustment module 1802 includes:
a switching sub-module configured to switch, in response to determining that n=1 and the to-be-removed window is not located at a starting point of the window queue, the current display interface to a display interface previous to the current display interface.

Optionally, n=3, the current display interface includes n application windows, and an nth application window includes two or more different application interfaces.

Optionally, the application window editing operation is a window width adjusting operation.

The current display interface further includes width adjusting controls separately configured between every two adjacent application windows. The width adjusting control is configured to adjust a width of the application windows.

The window width adjusting operation is a first control operation for any one of the width adjusting controls.

The adjustment module 1802 includes:
an adjustment sub-module configured to at least adjust a window width of the current display interface according to the first control operation and the window queue.

Optionally, in response to determining n=3, widths of the n application windows each are d/3, where d denotes a width of the current display interface, the adjustment sub-module includes:
a first stretching sub-module configured to stretch, in response to determining that the first control operation is to drag any one of the width adjusting controls away from the starting point, a width of a target application window to 2d/3, where an nth application window in the current display interface is pushed to a display interface subsequent to the current display interface, and the target application window is an application window, close to the starting point, of application windows at two ends of the width adjusting control targeted by the first control operation.

Optionally, in response to determining n=3, widths of the n application windows each are d/3, where d denotes a width of the current display interface, in response to determining that a first application window in the current display interface is located at a starting point of the window queue, the width adjusting control close to the starting point is further configured to adjust a width of the application window, away from the starting point, of application windows at two ends of the width adjusting control.

The adjustment sub-module further includes:
a second stretching sub-module configured to adjust, in response to determining that the first control operation is to drag a width adjusting control close to the starting point in the starting point direction, a width of a second application window in the current display interface to 2d/3, where the first application window is temporarily pushed out of the current display interface in the starting point direction.

Optionally, the apparatus 1800 further includes:
a display module configured to display, after the first application window is temporarily pushed out of the current display interface, a width adjusting control on a first vertical edge close to the starting point of the current display interface; and
a second adjustment module configured to adjust, in response to receiving a second control operation for the width adjusting control on the first vertical edge, a width of a second application window in the current display interface to d/3, and translate the first application window temporarily pushed out of the current display interface back to the current display interface, where the second control operation is to drag a width adjusting control on the first vertical edge away from the starting point.

Optionally, in response to determining n=2, widths of the n application windows each are d/3 or 2d/3, and the application window with the width of 2d/3 in the current display interface is close to the starting point, where d denotes a width of the current display interface.

The adjustment sub-module includes:
a first reduction sub-module configured to reduce, in response to determining that the first control operation is to drag the width adjusting control in the starting point direction and an (n+1)th application window exists, a width of the application window close to the starting point to d/3, translate the application window, away from the starting point, of the current display interface and the (n+1)th application window in the starting point direction by a width of d/3, and display the application window and the (n+1)th application window in the current display interface.

Optionally, in response to determining n=2, widths of the n application windows are d/3 and 2d/3 respectively, and the application window with the width of d/3 in the current display interface is close to the starting point, where d denotes a width of the current display interface.

The current display interface further includes a width adjusting control configured on a second vertical edge, away from the starting point, of the current display interface.

The adjustment sub-module includes:
a third stretching sub-module configured to stretch, in response to determining that the first control operation is to drag a width adjusting control close to the starting point away from the starting point, a width of a first application window in the current display interface to 2d/3, and reduce a width of a second application window in the current display interface to d/3.

Optionally, the adjustment sub-module further includes:
a first reduction sub-module configured to reduce, in response to determining that the first control operation is to drag a width adjusting control away from the starting point in the starting point direction, a width of the application window away from the starting point to d/3; and
a second translating sub-module configured to translate, in response to determining that an (n+1)th application window exists, the (n+1)th application window in the starting point direction by a width of d/3, and display the (n+1)th application window in the current display interface.

Optionally, the application window editing operation is a window adding operation;

The first adjustment module 1802 includes:
a first adding sub-module configured to add a to-be-added window to the current display interface at least according to existence of a vacant window position in the current display interface, where the to-be-added window is an application window corresponding to the window adding operation.

Optionally, the first adding sub-module includes:
a second adding sub-module configured to adjust, in response to determining that the vacant window position exists in the current display interface, a width of the to-be-added window according to a width of the vacant window position and the width of the to-be-added window, and then add the to-be-added window to the vacant window position.

Optionally, the second adding sub-module includes:
a third adding sub-module configured to add, in response to determining that the width of the to-be-added window is smaller than or equal to the width of the vacant window position, the to-be-added window to the vacant window position according to an original width; and
a fourth adding sub-module configured to reduce, in response to determining that a width of the to-be-added window is greater than that of the vacant window position, a width of the to-be-added window to a width of the vacant window position, and then add the to-be-added window to the vacant window position.

Optionally, a width of the application window is d/3 or 2d/3, and a width of the to-be-added window is d/3, where d denotes a width of the current display interface.

The first adding sub-module includes:
a fifth adding sub-module configured to add, in response to determining that the vacant window position exists in the current display interface, the to-be-added window to the vacant window position adjacent to an application window of an original display interface.

Optionally, in response to determining n=2, a width of the n application windows is selected to be d/3 or 2d/3, where d denotes a width of the current display interface.

The first adding sub-module includes:
a sixth adding sub-module configured to reduce, in response to determining that no vacant window position exists in the current display interface, a width of an application window with a width of 2d/3 in the current display interface to d/3, add 1 to n, and add the to-be-added window by a width of d/3 as an nth application window in the current display interface to the current display interface; and
a seventh adding sub-module configured to add, in response to determining that the vacant window position exists in the current display interface, the to-be-added window to the vacant window position of an original display interface.

Optionally, in response to determining n=3, widths of the n application windows each are d/3, where d denotes a width of the current display interface.

The first adding sub-module includes:
an eighth adding sub-module configured to add the to-be-added window by a width of d/3 to a position of the nth application window in the current display interface, where an original nth application window in the current display interface is pushed to a display interface subsequent to the current display interface.

Optionally, the application window editing operation is a window translating operation.

The adjustment module 1802 includes:
a first translating sub-module configured to trigger an application window position adjusting button to suspend a to-be-adjusted application window above the window queue, drag the to-be-adjusted application window to a to-be-adjusted position, and sequentially arrange original application windows backwards along the window queue in a direction opposite to the starting point direction after position determination.

Optionally, the application window editing operation is a window translating operation.

The first adjustment module 1802 includes:
a second translating sub-module configured to drag a to-be-adjusted application window to an edge position of the current display interface, activate another display interface adjacent to the current display interface, and conduct reordering in an application window of a new display interface.

For the apparatus in the above examples, a specific method for each module to execute an operation is described in detail in the examples relating to the method, which will not be described in detail here.

In addition, the invention provides a non-transitory computer-readable storage medium, which stores computer program instructions. The computer program instructions implement steps of the method for displaying an application according to the invention when being executed collectively by one or more processors.

The invention further provides an in-vehicle terminal. The in-vehicle terminal includes:
one or more processors; and
a memory configured to store instructions executable by the one or more processors.

The one or more processors are collectively is configured to execute the executable instructions in the memory, so as to implement steps of the method for displaying an application according to the invention.

In addition, the invention further provides a vehicle. The vehicle includes the in-vehicle terminal according to the invention.

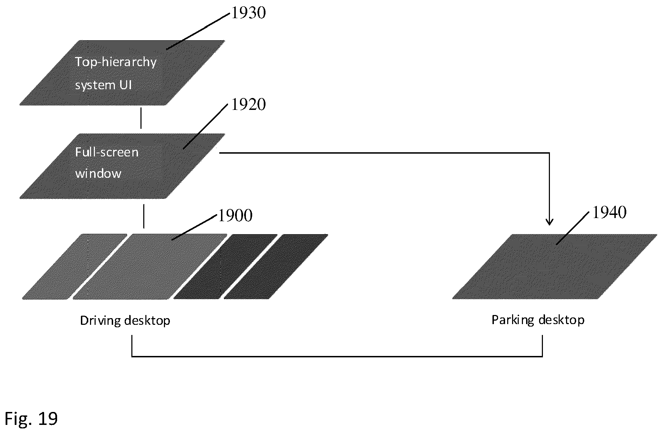

As shown in Fig. 19, a hierarchy of a display interface (that is, a driving desktop 1900) of the in-vehicle terminal in a vehicle running process is consistent with that of a widget, which is lower than that of a full-screen window 1920. The hierarchy of the full-screen window is lower than that of a user interface (UI) of a top-hierarchy system 1930. A display interface 1940 (that is, a parking desktop) of the in-vehicle terminal in a parking process is consistent with that of the driving desktop.

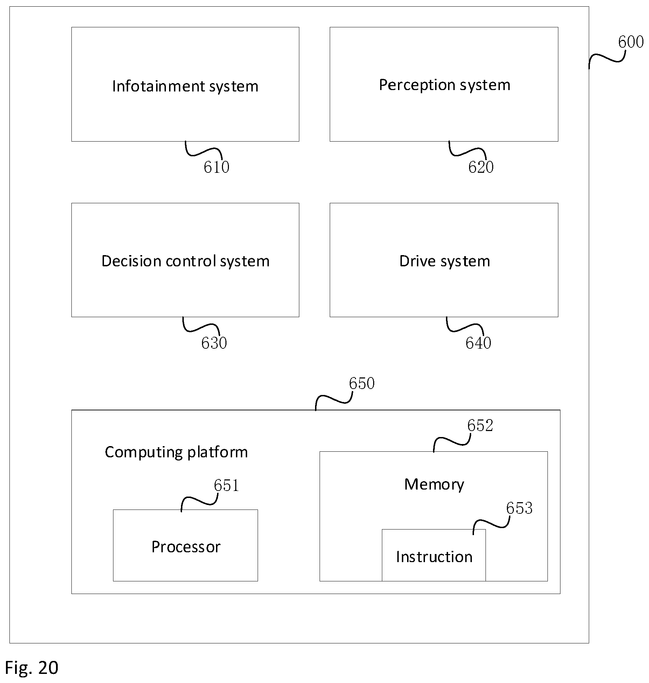

Fig. 20 is a block diagram of a vehicle 600 according to an example. For instance, the vehicle 600 may be a hybrid electric vehicle, a non-hybrid electric vehicle, an electric vehicle, a fuel cell vehicle, or another type of vehicle. The vehicle 600 may be an autonomous vehicle, a semi-autonomous vehicle, or a non-autonomous vehicle.

With reference to Fig. 20, the vehicle 600 may include various sub-systems, such as an infotainment system 610, a perception system 620, a decision control system 630, a drive system 640, and a computing platform 650. The vehicle 600 may further include more or less sub-systems, and each sub-system may include a plurality of components. In addition, each sub-system and each component of the vehicle 600 may be interconnected in a wired or wireless mode.

In some examples, the infotainment system 610 may include a communication system, an entertainment system, a navigation system, etc.

The perception system 620 may include several sensors configured to sense information of an environment around the vehicle 600. For instance, the perception system 620 may include a global positioning system (the global positioning system may be a GPS system, a Beidou system or another positioning system), an inertial measurement unit (IMU), a laser radar, a millimeter-wave radar, an ultrasonic radar, and a photographing apparatus.

The decision control system 630 may include a computing system, a vehicle controller, a steering system, a throttle, and a braking system.

The drive system 640 may include components that provide power for movement of the vehicle 600. In one example, the drive system 640 may include an engine, an energy source, a transmission system, and wheels. The engine may be one or a combination of an internal combustion engine, an electric motor, and an air compression engine. The engine may convert energy provided by the energy source into mechanical energy.

Some or all functions of the vehicle 600 are controlled by the computing platform 650. The computing platform 650 may include at least one processor 651 and a memory 652. The processor 651 may execute instructions 653 stored in the memory 652.

The processor 651 may be any conventional processor, such as a central processing unit (CPU) that is commercially available. The processor may also include, for instance, a graphic process unit (GPU), a field programmable gate array (FPGA), a system on chip (SOC), an application specific integrated circuit (ASIC), or a combination of them.

The memory 652 may be implemented by any type of volatile or nonvolatile memory device or their combinations, such as a static random access memory (SRAM), an electrically erasable programmable read only memory (EEPROM), an erasable programmable read only memory (EPROM), a programmable read only memory (PROM), a read only memory (ROM), a magnetic memory, a flash memory, a magnetic disk, or an optical disk.

In addition to the instructions 653, the memory 652 may further store data, such as a road map, route information, a vehicle position, direction and speed, and other data. The data stored in the memory 652 may be used by the computing platform 650.

In examples of the invention, the processor 651 may execute the instructions 653, so as to complete all or some steps of the above method for displaying an application.

It is to be understood that the invention is not limited to a precise structure described above and illustrated in the accompanying drawings, and can have various modifications and changes without departing from the scope. The scope of the invention is limited merely by the appended claims.

## Claims

1. A method for displaying an application, performed by an in-vehicle terminal, wherein a current display interface of the in-vehicle terminal comprises n application windows, wherein n≥1, and in response to determining n>1, the n application windows are arranged adjacent to each other in a transverse direction; and
the method comprises:
receiving (S101) an application window editing operation for the current display interface; and
adjusting (S102) an application window layout of the current display interface according to the application window editing operation and a window queue, wherein
the window queue is configured for continuous adjacent arrangement of the n application windows, a status of the window queue is dynamically updated with change of the application window layout, serial numbers of application windows in the window queue sequentially increase in a direction opposite to a starting point direction, a serial number of an application window, closest to a starting point of the window queue, of the n application windows is 1, and the starting point direction is a direction towards the starting point of the window queue, close to a driver side, of the in-vehicle terminal; and
at least part of a zone of the window queue overlaps a display interface of the in-vehicle terminal, so as to ensure that application windows in the window queue are displayed in the current display interface;
wherein the vehicle control method is **characterized in that**:
the application window editing operation is a window width adjusting operation;
the current display interface further comprises width adjusting controls separately configured between every two adjacent the application windows, wherein the width adjusting control is configured to adjust a width of the application windows;
the window width adjusting operation is a first control operation for any one of the width adjusting controls; and
the adjusting (S102) an application window layout of the current display interface according to the application window editing operation and a window queue comprises:
at least adjusting the window width of the current display interface according to the first control operation and the window queue.

2. The method according to claim 1, wherein the application window editing operation is a window removing operation; and
the adjusting (S102) an application window layout of the current display interface according to the application window editing operation and a window queue comprises:
determining a to-be-removed window in the current display interface according to the window removing operation;
removing the to-be-removed window n from the current display interface;
determining whether an (n+1)th application window exists; and
translating, in response to determining that the (n+1)th application window exists, an application window having a serial number greater than that of the to-be-removed window n in the window queue sequentially in the starting point direction, and displaying the application window in the current display interface.

3. The method according to claim 2, wherein translating an application window having a serial number greater than that of the to-be-removed window n in the window queue sequentially in the starting point direction, and displaying the application window in the current display interface comprise:
obtaining a first width of the (n+1)th application window and a second width of the to-be-removed window; and
determining a translating strategy according to a comparison result of the first width and the second width.

4. The method according to claim 3, wherein determining a translating strategy according to a comparison result of the first width and the second width comprises at least one of:
determining, in response to determining that the first width is greater than the second width, the translating strategy to reduce the first width of the (n+1)th application window to the second width, translate the (n+1)th application window in the starting point direction, and display the (n+1)th application window in the current display interface;
determining, in response to determining that the first width is smaller than the second width and an (n+2)th application window exists, the translating strategy to keep a width of the (n+1)th application window unchanged, translate the (n+1)th application window in the starting point direction, display the (n+1)th application window in the current display interface, and translate the (n+2)th application window in the starting point direction by a width equaling a difference between the second width and the first width; determining, in response to determining that the first width is smaller than the second width and the (n+2)th application window does not exist, the translating strategy to keep a width of the (n+1)th application window unchanged, translate the (n+1)th application window in the starting point direction, and display the (n+1)th application window in the current display interface; or
determining, in response to determining that the first width is equal to the second width, the translating strategy to keep a width of the (n+1)th application window unchanged, translate the (n+1)th application window in the starting point direction, and display the (n+1)th application window in the current display interface.

5. The method according to claim 1, wherein the application window editing operation is a window removing operation; and
the adjusting (S102) an application window layout of the current display interface according to the application window editing operation and a window queue comprises:
switching, in response to determining that n=1 and a to-be-removed window corresponding to the window removing operation is not located at a starting point of the window queue, the current display interface to a display interface previous to the current display interface.

6. The method according to claim 1, wherein at least adjusting the window width of the current display interface according to the first control operation and the window queue comprises at least one of:
in response to determining n=3, widths of the n application windows each are d/3, d denotes a width of the current display interface, stretching, in response to determining that the first control operation is to drag any one of the width adjusting controls away from the starting point, a width of a target application window to 2d/3, wherein an nth application window in the current display interface is pushed to a display interface subsequent to the current display interface, and the target application window is an application window, close to the starting point, of application windows at two ends of the width adjusting control targeted by the first control operation;
in response to determining n=3, widths of the n application windows each are d/3, d denotes a width of the current display interface, a first application window in the current display interface is located at a starting point of the window queue, the width adjusting control close to the starting point is further configured to adjust a width of an application window, away from the starting point, of application windows at two ends of the width adjusting control, adjusting, in response to determining that the first control operation is to drag a width adjusting control close to the starting point in the starting point direction, a width of a second application window in the current display interface to 2d/3, wherein the first application window is temporarily pushed out of the current display interface in the starting point direction;
in response to determining n=2, widths of the n application windows each are d/3 or 2d/3, and the application window with the width of 2d/3 in the current display interface is close to the starting point, wherein d denotes a width of the current display interface, reducing, in response to determining that the first control operation is to drag the width adjusting control in the starting point direction and an (n+1)th application window exists, a width of an application window close to the starting point to d/3, translating an application window, away from the starting point, of the current display interface and the (n+1)th application window in the starting point direction by a width of d/3, and displaying the application window and the (n+1)th application window in the current display interface;
in response to determining n=2, widths of the n application windows are d/3 and 2d/3 respectively, and an application window with the width of d/3 in the current display interface is close to the starting point, wherein d denotes a width of the current display interface, the current display interface further comprises a width adjusting control configured on a second vertical edge, away from the starting point, of the current display interface, stretching, in response to determining that the first control operation is to drag a width adjusting control close to the starting point away from the starting point, a width of a first application window in the current display interface to 2d/3, and reducing a width of a second application window in the current display interface to d/3; or
in response to determining n=2, widths of the n application windows are d/3 and 2d/3 respectively, and an application window with the width of d/3 in the current display interface is close to the starting point, wherein d denotes a width of the current display interface, the current display interface further comprises a width adjusting control configured on a second vertical edge, away from the starting point, of the current display interface, reducing, in response to determining that the first control operation is to drag a width adjusting control away from the starting point in the starting point direction, a width of the application window away from the starting point to d/3; translating, in response to determining that an (n+1)th application window exists, the (n+1)th application window in the starting point direction by a width of d/3, and displaying the (n+1)th application window in the current display interface.

7. The method according to claim 6, further comprising:
displaying, after the first application window is temporarily pushed out of the current display interface, a width adjusting control on a first vertical edge, close to the starting point, of the current display interface; and
adjusting, in response to receiving a second control operation for the width adjusting control on the first vertical edge, a width of a second application window in the current display interface to d/3, and translating the first application window temporarily pushed out of the current display interface back to the current display interface, wherein the second control operation is to drag a width adjusting control on the first vertical edge away from the starting point.

8. The method according to claim 1, wherein the application window editing operation is a window adding operation; and
the adjusting (S102) an application window layout of the current display interface according to the application window editing operation and a window queue comprises:
adding a to-be-added window to the current display interface at least according to existence of a vacant window position in the current display interface, wherein the to-be-added window is an application window corresponding to the window adding operation.

9. The method according to claim 8, wherein the adding a to-be-added window to the current display interface at least according to existence of a vacant window position in the current display interface comprises at least one of:
adjusting, in response to determining that the vacant window position exists in the current display interface, a width of the to-be-added window according to a width of the vacant window position and the width of the to-be-added window, and then adding the to-be-added window to the vacant window position;
wherein in response to determining n=1, a width of the application window is d/3 or 2d/3, and a width of the to-be-added window is d/3, wherein d denotes a width of the current display interface, adding the to-be-added window to the vacant window position adjacent to an application window of an original display interface;
in response to determining n=2, a width of the n application windows is selected to be d/3 or 2d/3, wherein d denotes a width of the current display interface, reducing, in response to determining that no vacant window position exists in the current display interface, a width of an application window with a width of 2d/3 in the current display interface to d/3, adding 1 to n, and adding the to-be-added window by a width of d/3 as an nth application window in the current display interface to the current display interface; adding, in response to determining that the vacant window position exists in the current display interface, the to-be-added window to the vacant window position of an original display interface; or
in response to determining n=3, widths of the n application windows each are d/3, wherein d denotes a width of the current display interface, adding the to-be-added window by a width of d/3 to a position of the nth application window in the current display interface, wherein an original nth application window in the current display interface is pushed to a display interface subsequent to the current display interface.

10. The method according to claim 9, wherein adjusting a width of the to-be-added window according to a width of the vacant window position and the width of the to-be-added window, and then adding the to-be-added window to the vacant window position comprise:
adding, in response to determining that the width of the to-be-added window is smaller than or equal to the width of the vacant window position, the to-be-added window to the vacant window position according to an original width; and
reducing, in response to determining that a width of the to-be-added window is greater than that of the vacant window position, a width of the to-be-added window to a width of the vacant window position, and then adding the to-be-added window to the vacant window position.

11. The method according to claim 1, wherein the application window editing operation is a window translating operation; and
the adjusting (S102) an application window layout of the current display interface according to the application window editing operation and a window queue comprises at least one of:
triggering an application window position adjusting button to suspend a to-be-adjusted application window above the window queue, dragging the to-be-adjusted application window to a to-be-adjusted position, and sequentially arranging original application windows backwards along the window queue in a direction opposite to the starting point direction after position determination; or
dragging a to-be-adjusted application window to an edge position of the current display interface, activating another display interface adjacent to the current display interface, and conducting reordering in an application window of a new display interface.

12. A non-transitory computer-readable storage medium, storing computer program instructions, wherein the computer program instructions implement steps of the method according to any one of claims 1-11 when being executed collectively by one or more processors.

13. An in-vehicle terminal, comprising:
one or more processors (651); and
a memory (652) configured to store instructions executable by the one or more processors (651), wherein the one or more processors (651) are collectively configured to execute the executable instructions in the memory (652), so as to implement the steps of the method according to any one of claims 1-11.

14. A vehicle (600), comprising an in-vehicle terminal according to claim 13.

## Patentansprüche

1. Ein Verfahren zum Anzeigen einer Anwendung, das von einem fahrzeuginternen Endgerät durchgeführt wird, wobei eine aktuelle Anzeigeschnittstelle des fahrzeuginternen Endgeräts n Anwendungsfenster aufweist, wobei n≥1, und als Reaktion auf ein Bestimmen von n>1 die n Anwendungsfenster in einer Querrichtung nebeneinander angeordnet sind; und
das Verfahren folgende Schritte aufweist:
Empfangen (S101) einer Anwendungsfensterbearbeitungsoperation für die aktuelle Anzeigeschnittstelle; und
Anpassen (S102) eines Anwendungsfenster-Layouts der aktuellen Anzeigeschnittstelle gemäß der Anwendungsfensterbearbeitungsoperation und einer Fensterwarteschlange, wobei
die Fensterwarteschlange konfiguriert ist für eine kontinuierliche benachbarte Anordnung der n Anwendungsfenster, ein Status der Fensterwarteschlange mit einer Änderung des Anwendungsfenster-Layouts dynamisch aktualisiert wird, Seriennummern von Anwendungsfenstern in der Fensterwarteschlange sequentiell in einer Richtung entgegengesetzt zu einer Startpunktrichtung zunehmen, eine Seriennummer eines Anwendungsfensters, das einem Startpunkt der Fensterwarteschlange am nächsten ist, der n Anwendungsfenster 1 ist und die Startpunktrichtung eine Richtung zu dem Startpunkt der Fensterwarteschlange, nahe einer Fahrerseite, des fahrzeuginternen Endgeräts ist; und
zumindest ein Teil einer Zone der Fensterwarteschlange eine Anzeigeschnittstelle des fahrzeuginternen Endgeräts überlappt, um sicherzustellen, dass Anwendungsfenster in der Fensterwarteschlange in der aktuellen Anzeigeschnittstelle angezeigt werden;
wobei das Fahrzeugsteuerungsverfahren **dadurch gekennzeichnet ist, dass**:
die Anwendungsfensterbearbeitungsoperation eine Fensterbreitenanpassungsoperation ist;
die aktuelle Anzeigeschnittstelle ferner Breitenanpassungssteuerungen aufweist, die separat zwischen jeweils zwei benachbarten der Anwendungsfenster konfiguriert sind, wobei die Breitenanpassungssteuerung dazu konfiguriert ist, eine Breite der Anwendungsfenster anzupassen;
die Fensterbreitenanpassungsoperation eine erste Steuerungsoperation für eine der Breitenanpassungssteuerungen ist; und
das Anpassen (S102) eines Anwendungsfenster-Layouts der aktuellen Anzeigeschnittstelle gemäß der Anwendungsfensterbearbeitungsoperation und einer Fensterwarteschlange folgenden Schritt aufweist:
zumindest Anpassen der Fensterbreite der aktuellen Anzeigeschnittstelle gemäß der ersten Steuerungsoperation und der Fensterwarteschlange.

2. Das Verfahren gemäß Anspruch 1, wobei die Anwendungsfensterbearbeitungsoperation eine Fensterentfernungsoperation ist; und
das Anpassen (S102) eines Anwendungsfenster-Layouts der aktuellen Anzeigeschnittstelle gemäß der Anwendungsfensterbearbeitungsoperation und einer Fensterwarteschlange folgenden Schritt aufweist:
Bestimmen eines zu entfernenden Fensters in der aktuellen Anzeigeschnittstelle gemäß der Fensterentfernungsoperation;
Entfernen des zu entfernenden Fensters n aus der aktuellen Anzeigeschnittstelle;
Bestimmen, ob ein (n+1)-tes Anwendungsfenster existiert; und
als Reaktion auf ein Bestimmen, dass das (n+1)-te Anwendungsfenster existiert, sequentielles Übersetzen eines Anwendungsfensters mit einer Seriennummer, die größer ist als die des zu entfernenden Fensters n, in der Fensterwarteschlange in der Startpunktrichtung und Anzeigen des Anwendungsfensters in der aktuellen Anzeigeschnittstelle.

3. Das Verfahren gemäß Anspruch 2, wobei das sequentielle Übersetzen eines Anwendungsfensters mit einer Seriennummer, die größer ist als die des zu entfernenden Fensters n, in der Fensterwarteschlange in der Startpunktrichtung und das Anzeigen des Anwendungsfensters in der aktuellen Anzeigeschnittstelle folgende Schritte aufweist:
Erhalten einer ersten Breite des (n+1)-ten Anwendungsfensters und einer zweiten Breite des zu entfernenden Fensters; und
Bestimmen einer Übersetzungsstrategie gemäß einem Vergleichsergebnis der ersten Breite und der zweiten Breite.

4. Das Verfahren gemäß Anspruch 3, wobei das Bestimmen einer Übersetzungsstrategie gemäß einem Vergleichsergebnis der ersten Breite und der zweiten Breite mindestens einen der folgenden Schritte aufweist:
Bestimmen, als Reaktion auf ein Bestimmen, dass die erste Breite größer ist als die zweite Breite, der Übersetzungsstrategie, um die erste Breite des (n+1)-ten Anwendungsfensters auf die zweite Breite zu reduzieren, das (n+1)-te Anwendungsfenster in der Startpunktrichtung zu übersetzen und das (n+1)-te Anwendungsfenster in der aktuellen Anzeigeschnittstelle anzuzeigen;
Bestimmen, als Reaktion auf ein Bestimmen, dass die erste Breite kleiner ist als die zweite Breite und ein (n+2)-tes Anwendungsfenster existiert, der Übersetzungsstrategie, um eine Breite des (n+1)-ten Anwendungsfensters unverändert zu halten, das (n+1)-te Anwendungsfenster in der Startpunktrichtung zu übersetzen, das (n+1)-te Anwendungsfenster in der aktuellen Anzeigeschnittstelle anzuzeigen und das (n+2)-te Anwendungsfenster in der Startpunktrichtung um eine Breite zu übersetzen, die gleich einer Differenz zwischen der zweiten Breite und der ersten Breite ist; Bestimmen, als Reaktion auf ein Bestimmen, dass die erste Breite kleiner ist als die zweite Breite und das (n+2)-te Anwendungsfenster nicht existiert, der Übersetzungsstrategie, um eine Breite des (n+1)-ten Anwendungsfensters unverändert zu halten, das (n+1)-te Anwendungsfenster in der Startpunktrichtung zu übersetzen und das (n+1)-te Anwendungsfenster in der aktuellen Anzeigeschnittstelle anzuzeigen; oder
Bestimmen, als Reaktion auf ein Bestimmen, dass die erste Breite gleich der zweiten Breite ist, der Übersetzungsstrategie, um eine Breite des (n+1)-ten Anwendungsfensters unverändert zu halten, das (n+1)-te Anwendungsfenster in der Startpunktrichtung zu übersetzen und das (n+1)-te Anwendungsfenster in der aktuellen Anzeigeschnittstelle anzuzeigen.

5. Das Verfahren gemäß Anspruch 1, wobei die Anwendungsfensterbearbeitungsoperation eine Fensterentfernungsoperation ist; und
das Anpassen (S102) eines Anwendungsfenster-Layouts der aktuellen Anzeigeschnittstelle gemäß der Anwendungsfensterbearbeitungsoperation und einer Fensterwarteschlange folgenden Schritt aufweist:
als Reaktion auf ein Bestimmen, dass n=1 ist und sich ein zu entfernendes Fenster, das der Fensterentfernungsoperation entspricht, nicht an einem Startpunkt der Fensterwarteschlange befindet, Umschalten der aktuellen Anzeigeschnittstelle auf eine Anzeigeschnittstelle vor der aktuellen Anzeigeschnittstelle.

6. Das Verfahren gemäß Anspruch 1, wobei das zumindest Anpassen der Fensterbreite der aktuellen Anzeigeschnittstelle gemäß der ersten Steuerungsoperation und der Fensterwarteschlange mindestens einen der folgenden Schritte aufweist:
als Reaktion auf ein Bestimmen von n=3 sind Breiten der n Anwendungsfenster jeweils d/3, d bezeichnet eine Breite der aktuellen Anzeigeschnittstelle, als Reaktion auf ein Bestimmen, dass die erste Steuerungsoperation darin besteht, eine der Breitenanpassungssteuerungen von dem Startpunkt weg zu ziehen, Strecken einer Breite eines Zielanwendungsfensters auf 2d/3, wobei ein n-tes Anwendungsfenster in der aktuellen Anzeigeschnittstelle auf eine Anzeigeschnittstelle nach der aktuellen Anzeigeschnittstelle geschoben wird und das Zielanwendungsfenster ein Anwendungsfenster, nahe dem Startpunkt, von Anwendungsfenstern an zwei Enden der Breitenanpassungssteuerung ist, auf die die erste Steuerungsoperation abzielt;
als Reaktion auf ein Bestimmen von n=3 sind Breiten der n Anwendungsfenster jeweils d/3, d bezeichnet eine Breite der aktuellen Anzeigeschnittstelle, ein erstes Anwendungsfenster befindet sich in der aktuellen Anzeigeschnittstelle an einem Startpunkt der Fensterwarteschlange, die Breitenanpassungssteuerung nahe dem Startpunkt ist ferner dazu konfiguriert, eine Breite eines Anwendungsfensters, weg von dem Startpunkt, von Anwendungsfenstern an zwei Enden der Breitenanpassungssteuerung anzupassen, als Reaktion auf ein Bestimmen, dass die erste Steuerungsoperation darin besteht, eine Breitenanpassungssteuerung nahe dem Startpunkt in der Startpunktrichtung zu ziehen, Anpassen einer Breite eines zweiten Anwendungsfensters in der aktuellen Anzeigeschnittstelle auf 2d/3, wobei das erste Anwendungsfenster vorübergehend aus der aktuellen Anzeigeschnittstelle in der Startpunktrichtung geschoben wird;
als Reaktion auf ein Bestimmen von n=2 sind Breiten der n Anwendungsfenster jeweils d/3 oder 2d/3 und das Anwendungsfenster mit der Breite von 2d/3 in der aktuellen Anzeigeschnittstelle befindet sich nahe dem Startpunkt, wobei d eine Breite der aktuellen Anzeigeschnittstelle bezeichnet, als Reaktion auf ein Bestimmen, dass die erste Steuerungsoperation darin besteht, die Breitenanpassungssteuerung in der Startpunktrichtung zu ziehen und ein (n+1)-tes Anwendungsfenster existiert, Reduzieren einer Breite eines Anwendungsfensters nahe dem Startpunkt auf d/3, Übersetzen eines Anwendungsfensters, weg von dem Startpunkt, der aktuellen Anzeigeschnittstelle und des (n+1)-ten Anwendungsfensters in der Startpunktrichtung um eine Breite von d/3 und Anzeigen des Anwendungsfensters und des (n+1)-ten Anwendungsfensters in der aktuellen Anzeigeschnittstelle;
als Reaktion auf ein Bestimmen von n=2 sind Breiten der n Anwendungsfenster jeweils d/3 und 2d/3 und ein Anwendungsfenster mit der Breite von d/3 in der aktuellen Anzeigeschnittstelle befindet sich nahe dem Startpunkt, wobei d eine Breite der aktuellen Anzeigeschnittstelle bezeichnet, die aktuelle Anzeigeschnittstelle ferner eine Breitenanpassungssteuerung aufweist, die an einer zweiten vertikalen Kante, weg von dem Startpunkt, der aktuellen Anzeigeschnittstelle konfiguriert ist, als Reaktion auf ein Bestimmen, dass die erste Steuerungsoperation darin besteht, eine Breitenanpassungssteuerung nahe dem Startpunkt von dem Startpunkt weg zu ziehen, Strecken einer Breite eines ersten Anwendungsfensters in der aktuellen Anzeigeschnittstelle auf 2d/3 und Reduzieren einer Breite eines zweiten Anwendungsfensters in der aktuellen Anzeigeschnittstelle auf d/3; oder
als Reaktion auf ein Bestimmen von n=2 sind Breiten der n Anwendungsfenster jeweils d/3 und 2d/3 und ein Anwendungsfenster mit der Breite von d/3 in der aktuellen Anzeigeschnittstelle befindet sich nahe dem Startpunkt, wobei d eine Breite der aktuellen Anzeigeschnittstelle bezeichnet, die aktuelle Anzeigeschnittstelle ferner eine Breitenanpassungssteuerung aufweist, die an einer zweiten vertikalen Kante, weg von dem Startpunkt, der aktuellen Anzeigeschnittstelle konfiguriert ist, als Reaktion auf ein Bestimmen, dass die erste Steuerungsoperation darin besteht, eine Breitenanpassungssteuerung von dem Startpunkt weg in der Startpunktrichtung zu ziehen, Reduzieren einer Breite des Anwendungsfensters weg von dem Startpunkt auf d/3; als Reaktion auf ein Bestimmen, dass ein (n+1)-tes Anwendungsfenster existiert, Übersetzen des (n+1)-ten Anwendungsfensters in der Startpunktrichtung um eine Breite von d/3 und Anzeigen des (n+1)-ten Anwendungsfensters in der aktuellen Anzeigeschnittstelle.

7. Das Verfahren gemäß Anspruch 6, das ferner folgende Schritte aufweist:
Anzeigen, nachdem das erste Anwendungsfenster vorübergehend aus der aktuellen Anzeigeschnittstelle geschoben wurde, einer Breitenanpassungssteuerung an einer ersten vertikalen Kante, nahe dem Startpunkt, der aktuellen Anzeigeschnittstelle; und
als Reaktion auf ein Empfangen einer zweiten Steuerungsoperation für die Breitenanpassungssteuerung an der ersten vertikalen Kante, Anpassen einer Breite eines zweiten Anwendungsfensters in der aktuellen Anzeigeschnittstelle auf d/3 und Übersetzen des ersten Anwendungsfensters, das vorübergehend aus der aktuellen Anzeigeschnittstelle geschoben wurde, zurück zu der aktuellen Anzeigeschnittstelle, wobei die zweite Steuerungsoperation darin besteht, eine Breitenanpassungssteuerung an der ersten vertikalen Kante von dem Startpunkt weg zu ziehen.

8. Das Verfahren gemäß Anspruch 1, wobei die Anwendungsfensterbearbeitungsoperation eine Fensterhinzufügungsoperation ist; und
das Anpassen (S102) eines Anwendungsfenster-Layouts der aktuellen Anzeigeschnittstelle gemäß der Anwendungsfensterbearbeitungsoperation und einer Fensterwarteschlange folgenden Schritt aufweist:
Hinzufügen eines hinzuzufügenden Fensters zu der aktuellen Anzeigeschnittstelle zumindest gemäß dem Vorhandensein einer freien Fensterposition in der aktuellen Anzeigeschnittstelle, wobei das hinzuzufügende Fenster ein Anwendungsfenster ist, das der Fensterhinzufügungsoperation entspricht.

9. Das Verfahren gemäß Anspruch 8, wobei das Hinzufügen eines hinzuzufügenden Fensters zu der aktuellen Anzeigeschnittstelle zumindest gemäß dem Vorhandensein einer freien Fensterposition in der aktuellen Anzeigeschnittstelle mindestens einen der folgenden Schritte aufweist:
als Reaktion auf ein Bestimmen, dass die freie Fensterposition in der aktuellen Anzeigeschnittstelle existiert, Anpassen einer Breite des hinzuzufügenden Fensters gemäß einer Breite der freien Fensterposition und der Breite des hinzuzufügenden Fensters und dann Hinzufügen des hinzuzufügenden Fensters zu der freien Fensterposition;
wobei als Reaktion auf ein Bestimmen von n=1 eine Breite des Anwendungsfensters d/3 oder 2d/3 ist und eine Breite des hinzuzufügenden Fensters d/3 ist, wobei d eine Breite der aktuellen Anzeigeschnittstelle bezeichnet, Hinzufügen des hinzuzufügenden Fensters zu der freien Fensterposition benachbart zu einem Anwendungsfenster einer ursprünglichen Anzeigeschnittstelle;
als Reaktion auf ein Bestimmen von n=2 wird eine Breite der n Anwendungsfenster als d/3 oder 2d/3 ausgewählt, wobei d eine Breite der aktuellen Anzeigeschnittstelle bezeichnet, als Reaktion auf ein Bestimmen, dass keine freie Fensterposition in der aktuellen Anzeigeschnittstelle existiert, Reduzieren einer Breite eines Anwendungsfensters mit einer Breite von 2d/3 in der aktuellen Anzeigeschnittstelle auf d/3, Hinzufügen von 1 zu n und Hinzufügen des hinzuzufügenden Fensters um eine Breite von d/3 als ein n-tes Anwendungsfenster in der aktuellen Anzeigeschnittstelle zu der aktuellen Anzeigeschnittstelle; als Reaktion auf ein Bestimmen, dass die freie Fensterposition in der aktuellen Anzeigeschnittstelle existiert, Hinzufügen des hinzuzufügenden Fensters zu der freien Fensterposition einer ursprünglichen Anzeigeschnittstelle; oder
als Reaktion auf ein Bestimmen von n=3 sind Breiten der n Anwendungsfenster jeweils d/3, wobei d eine Breite der aktuellen Anzeigeschnittstelle bezeichnet, Hinzufügen des hinzuzufügenden Fensters um eine Breite von d/3 zu einer Position des n-ten Anwendungsfensters in der aktuellen Anzeigeschnittstelle, wobei ein ursprüngliches n-tes Anwendungsfenster in der aktuellen Anzeigeschnittstelle auf eine Anzeigeschnittstelle nach der aktuellen Anzeigeschnittstelle geschoben wird.

10. Das Verfahren gemäß Anspruch 9, wobei das Anpassen einer Breite des hinzuzufügenden Fensters gemäß einer Breite der freien Fensterposition und der Breite des hinzuzufügenden Fensters und dann das Hinzufügen des hinzuzufügenden Fensters zu der freien Fensterposition folgende Schritte aufweist:
als Reaktion auf ein Bestimmen, dass die Breite des hinzuzufügenden Fensters kleiner oder gleich der Breite der freien Fensterposition ist, Hinzufügen des hinzuzufügenden Fensters zu der freien Fensterposition gemäß einer ursprünglichen Breite; und
als Reaktion auf ein Bestimmen, dass eine Breite des hinzuzufügenden Fensters größer ist als die der freien Fensterposition, Reduzieren einer Breite des hinzuzufügenden Fensters auf eine Breite der freien Fensterposition und dann Hinzufügen des hinzuzufügenden Fensters zu der freien Fensterposition.

11. Das Verfahren gemäß Anspruch 1, wobei die Anwendungsfensterbearbeitungsoperation eine Fensterübersetzungsoperation ist; und
das Anpassen (S102) eines Anwendungsfenster-Layouts der aktuellen Anzeigeschnittstelle gemäß der Anwendungsfensterbearbeitungsoperation und einer Fensterwarteschlange mindestens einen der folgenden Schritte aufweist:
Auslösen einer Anwendungsfensterpositionsanpassungstaste, um ein anzupassendes Anwendungsfenster über der Fensterwarteschlange auszusetzen, Ziehen des anzupassenden Anwendungsfensters in eine anzupassende Position und sequentielles Anordnen ursprünglicher Anwendungsfenster rückwärts entlang der Fensterwarteschlange in einer Richtung entgegengesetzt zu der Startpunktrichtung nach einer Positionsbestimmung; oder
Ziehen eines anzupassenden Anwendungsfensters in eine Kantenposition der aktuellen Anzeigeschnittstelle, Aktivieren einer anderen Anzeigeschnittstelle benachbart zu der aktuellen Anzeigeschnittstelle und Durchführen einer Neuordnung in einem Anwendungsfenster einer neuen Anzeigeschnittstelle.

12. Ein nichtflüchtiges computerlesbares Speichermedium, das Computerprogrammanweisungen speichert, wobei die Computerprogrammanweisungen Schritte des Verfahrens gemäß einem der Ansprüche 1-11 implementieren, wenn sie gemeinsam durch einen oder mehrere Prozessoren ausgeführt werden.

13. Ein fahrzeuginternes Endgerät, das Folgendes aufweist:
einen oder mehrere Prozessoren (651); und
einen Speicher (652), der dazu konfiguriert ist, Anweisungen zu speichern, die durch den einen oder die mehreren Prozessoren (651) ausführbar sind, wobei der eine oder die mehreren Prozessoren (651) gemeinsam dazu konfiguriert sind, die ausführbaren Anweisungen in dem Speicher (652) auszuführen, um die Schritte des Verfahrens gemäß einem der Ansprüche 1-11 zu implementieren.

14. Ein Fahrzeug (600), das ein fahrzeuginternes Endgerät gemäß Anspruch 13 aufweist.

## Revendications

1. Procédé d'affichage d'une application, mis en œuvre par un terminal embarqué, dans lequel une interface d'affichage actuelle du terminal embarqué comprend n fenêtres d'application, dans lequel n ≥ 1, et en réponse à la détermination que n > 1, les n fenêtres d'application sont agencées en contigu les unes aux autres dans une direction transversale ; et
le procédé comprend :
la réception (S101) d'une opération d'édition de fenêtre de l'application pour l'interface d'affichage actuelle ; et l'ajustement (S102) d'une disposition de fenêtre d'application de l'interface d'affichage actuelle selon l'opération d'édition de fenêtre de l'application et une file d'attente de fenêtre, dans lequel
la file d'attente de fenêtre est configurée pour un agencement contigu et continu des n fenêtres d'application ; un état de la file d'attente de fenêtre est mis à jour dynamiquement lors de modification de la disposition de fenêtre d'application, des numéros de série des fenêtres d'application dans la file d'attente de fenêtre augmentent séquentiellement dans une direction opposée à une direction du point de départ, un numéro de série d'une fenêtre d'application la plus proche à un point de départ de la file d'attente de fenêtre, des n fenêtres d'application, est 1 ; et la direction du point de départ est une direction vers le point de départ de la file d'attente de fenêtre, proche d'un côté conducteur du terminal embarqué ; et
au moins une partie d'une zone de la file d'attente de fenêtre chevauche une interface d'affichage du terminal embarqué, de sorte à garantir que les fenêtres d'application dans la file d'attente de fenêtre sont affichées dans l'interface d'affichage actuelle ;
dans lequel le procédé de commande de véhicule est **caractérisé en ce que** :
l'opération d'édition de fenêtre de l'application est une opération d'ajustement de largeur de fenêtre ;
l'interface d'affichage actuelle comprend en outre des commandes d'ajustement de largeur, configurées séparément entre chaque paire des fenêtres d'application contiguës, dans lequel la commande d'ajustement de largeur est configurée pour ajuster une largeur des fenêtres d'application ;
l'opération d'ajustement de largeur de fenêtre est une première opération de commande pour l'une quelconque des commandes d'ajustement de largeur ; et
l'ajustement (S102) d'une disposition de fenêtre d'application de l'interface d'affichage actuelle selon l'opération d'édition de fenêtre de l'application et d'une file d'attente de fenêtre comprend :
au moins l'ajustement de la largeur de fenêtre de l'interface d'affichage actuelle selon la première opération de commande et de la file d'attente de fenêtre.

2. Procédé selon la revendication 1, dans lequel l'opération d'édition de fenêtre de l'application est une opération de suppression de fenêtre ; et
l'ajustement (S102) d'une disposition de fenêtre d'application de l'interface d'affichage actuelle selon l'opération d'édition de fenêtre de l'application et d'une file d'attente de fenêtre comprend :
la détermination d'une fenêtre devant être supprimée dans l'interface d'affichage actuelle, selon l'opération de suppression de fenêtre ;
la suppression de la fenêtre n devant être supprimée de l'interface d'affichage actuelle ;
la détermination s'il existe une (n+1)ième fenêtre d'application ; et
le déplacement, en réponse à la détermination que la (n+1)ième fenêtre d'application existe, d'une fenêtre d'application présentant un numéro de série supérieur à celui de la fenêtre n devant être supprimée dans la file d'attente de fenêtre, de manière séquentielle dans la direction du point de départ, et l'affichage de la fenêtre d'application dans l'interface d'affichage actuelle.

3. Procédé selon la revendication 2, dans lequel le déplacement d'une fenêtre d'application présentant un numéro de série supérieur à celui de la fenêtre n devant être supprimée dans la file d'attente de fenêtre, de manière séquentielle dans la direction du point de départ, et l'affichage de la fenêtre d'application dans l'interface d'affichage actuelle, comprend :
l'obtention d'une première largeur de la (n+1)ième fenêtre d'application et une deuxième largeur de la fenêtre devant être supprimée ; et
la détermination d'une stratégie de déplacement selon un résultat de comparaison entre la première largeur et la deuxième largeur.

4. Procédé selon la revendication 3, dans lequel la détermination d'une stratégie de déplacement selon un résultat de comparaison entre la première largeur et la deuxième largeur comprend au moins l'un : de la détermination, en réponse à la détermination que la première largeur est supérieure à la deuxième largeur, de la stratégie de déplacement pour réduire la première largeur de la (n+1)ième fenêtre d'application à la deuxième largeur, déplacer la (n+1)ième fenêtre d'application dans la direction du point de départ, et afficher la (n+1)ième fenêtre d'application dans l'interface d'affichage actuelle ;
la détermination, en réponse à la détermination que la première largeur est inférieure à la deuxième largeur et qu'une (n+2)ième fenêtre d'application existe, de la stratégie de déplacement pour maintenir une largeur de la (n+1)ième fenêtre d'application inchangée, déplacer la (n+1)ième fenêtre d'application dans la direction du point de départ, afficher la (n+1)ième fenêtre d'application dans l'interface d'affichage actuelle, et déplacer la (n+2)ième fenêtre d'application dans la direction du point de départ pour une largeur équivalente à une différence entre la deuxième largeur et la première largeur ; la détermination, en réponse à la détermination que la première largeur est inférieure à la deuxième largeur et que la (n+2)ième fenêtre d'application n'existe pas, la stratégie de déplacement pour maintenir une largeur de la (n+1)ième fenêtre d'application inchangée, déplacer la (n+1)ième fenêtre d'application dans la direction du point de départ, et affiche la (n+1)ième fenêtre d'application dans l'interface d'affichage actuelle ; ou
la détermination, en réponse à la détermination que la première largeur est égale à la deuxième largeur, de la stratégie de déplacement pour maintenir la largeur de la (n+1)ième fenêtre d'application inchangée, déplacer la (n+1)ième fenêtre d'application dans la direction du point de départ, et afficher la (n+1)ième fenêtre d'application dans l'interface d'affichage actuelle.

5. Procédé selon la revendication 1, dans lequel l'opération d'édition de fenêtre de l'application est une opération de suppression de fenêtre ; et
l'ajustement (S102) d'une disposition de fenêtre d'application de l'interface d'affichage actuelle selon l'opération d'édition de fenêtre de l'application et d'une file d'attente de fenêtre comprend :
le remplacement, en réponse à la détermination que n = 1 et qu'une fenêtre devant être supprimée correspondant à l'opération de suppression de fenêtre n'est pas localisée à un point de départ de la file d'attente de fenêtre, de l'interface d'affichage actuelle par une interface d'affichage précédant à l'interface d'affichage actuelle.

6. Procédé selon la revendication 1, dans lequel au moins l'ajustement la largeur de la fenêtre de l'interface d'affichage actuelle selon la première opération de commande et la file d'attente de fenêtre comprend au moins l'une des éléments suivants :
en réponse à la détermination que n = 3, les largeurs des n fenêtres d'application sont chacune égale à d/3, d désigne une largeur de l'interface d'affichage actuelle ; l'étirement, en réponse à la détermination que la première opération de commande consiste à faire glisser l'une quelconque des commandes d'ajustement de largeur en éloignement du point de départ, une largeur d'une fenêtre d'application cible à 2d/3, dans lequel une n-ième fenêtre d'application dans l'interface d'affichage actuelle est poussée vers une interface d'affichage succédant à l'interface d'affichage actuelle, et la fenêtre d'application cible est une fenêtre d'application, proche du point de départ, des fenêtres d'application situées aux deux extrémités de la commande d'ajustement de largeur ciblée par la première opération de commande ;
en réponse à la détermination que n = 3, les largeurs des n fenêtres d'application sont chacune égales à d/3, d désigne une largeur de l'interface d'affichage actuelle ; une première fenêtre d'application dans l'interface d'affichage actuelle est située à un point de départ de la file d'attente de fenêtre ; la commande d'ajustement de largeur proche du point de départ est en outre configuré pour ajuster une largeur d'une fenêtre d'application, en éloignement du point de départ, des fenêtres d'application situées aux deux extrémités de la commande d'ajustement de largeur, l'ajustement, en réponse à la détermination que la première opération de commande consiste à faire glisser une commande d'ajustement de largeur proche du point de départ dans la direction du point de départ, une largeur d'une deuxième fenêtre d'application dans l'interface d'affichage actuelle à 2d/3, dans lequel la première fenêtre d'application est temporairement repoussée hors de l'interface d'affichage actuelle dans la direction du point de départ ;
en réponse à la détermination que n = 2, les largeurs des n fenêtres d'application sont chacune égale à d/3 ou 2d/3, et la fenêtre d'application d'une largeur de 2d/3 dans l'interface d'affichage actuelle est proche du point de départ, dans lequel d désigne une largeur de l'interface d'affichage actuelle, réduisant, en réponse à la détermination que la première opération de commande consiste à faire glisser la commande d'ajustement de largeur dans la direction du point de départ et qu'une (n+1)ième fenêtre d'application existe, une largeur d'une fenêtre d'application proche du point de départ à d/3, déplaçant une fenêtre d'application, en éloignement du point de départ, de l'interface d'affichage actuelle et la (n+1)ième fenêtre d'application, dans la direction du point de départ, d'une largeur de d/3, et affichant la fenêtre d'application et la (n+1)ième fenêtre d'application dans l'interface d'affichage actuelle ;
en réponse à la détermination que n = 2, les largeurs des n fenêtres d'application sont respectivement égales à d/3 et 2d/3, et une fenêtre d'application d'une largeur de d/3 dans l'interface d'affichage actuelle est proche du point de départ, dans lequel d désigne une largeur de l'interface d'affichage actuelle, l'interface d'affichage actuelle comprend en outre une commande d'ajustement de largeur configurée sur un deuxième bord vertical, en éloignement du point de départ, de l'interface d'affichage actuelle, l'étirement, en réponse à la détermination que la première opération de commande consiste à faire glisser une commande d'ajustement de largeur proche du point de départ en éloignement du point de départ, une largeur d'une première fenêtre d'application dans l'interface d'affichage actuelle à 2d/3 et réduisant une largeur d'une deuxième fenêtre d'application dans l'interface d'affichage actuelle à d/3 ; ou
en réponse à la détermination que n = 2, les largeurs des n fenêtres d'application sont respectivement égales à d/3 et 2d/3, et une fenêtre d'application d'une largeur de d/3 dans l'interface d'affichage actuelle est proche du point de départ, dans lequel d désigne une largeur de l'interface d'affichage actuelle, l'interface d'affichage actuelle comprend en outre une commande d'ajustement de largeur configurée sur un deuxième bord vertical, en éloignement du point de départ, de l'interface d'affichage actuelle, réduisant, en réponse à la détermination que la première opération de commande consiste à faire glisser une commande d'ajustement de largeur en éloignement du point de départ dans la direction du point de départ, une largeur de la fenêtre d'application en éloignement du point de départ à d/3 ; le déplacement, en réponse à la détermination de l'existence d'une (n+1)ième fenêtre d'application, la (n+1)ième fenêtre d'application dans la direction du point de départ d'une largeur de d/3, et l'affichage de la (n+1)ième fenêtre d'application dans l'interface d'affichage actuelle.

7. Procédé selon la revendication 6, comprenant en outre :
l'affichage, une fois que la première fenêtre d'application a été temporairement poussée hors de l'interface d'affichage actuelle, une commande d'ajustement de largeur sur un premier bord vertical, proche du point de départ, de l'interface d'affichage actuelle ; et
l'ajustement, en réponse à la réception d'une deuxième opération de commande pour la commande d'ajustement de largeur située sur le premier bord vertical, une largeur d'une deuxième fenêtre d'application dans l'interface d'affichage actuelle à d/3, et ramener la première interface d'affichage temporairement poussée hors de fenêtre d'application actuelle dans la fenêtre d'application actuelle, dans lequel la deuxième opération de commande consiste à faire glisser une commande d'ajustement de la largeur situé sur le premier bord vertical en éloignement du point de départ.

8. Procédé selon la revendication 1, dans lequel l'opération d'édition de fenêtre de l'application est une opération d'ajout de fenêtre ; et
l'ajustement (S102) d'une disposition de fenêtre d'application de l'interface d'affichage actuelle selon l'opération d'édition de fenêtre de l'application et d'une file d'attente de fenêtre comprend :
l'ajout d'une fenêtre devant être ajoutée à l'interface d'affichage actuelle, au moins selon l'existence d'une position de fenêtre vacante dans l'interface d'affichage actuelle, dans lequel la fenêtre devant être ajoutée est une fenêtre d'application correspondant à l'opération d'ajout de fenêtre.

9. Procédé selon la revendication 8, dans lequel l'ajout d'une fenêtre devant être ajoutée à l'interface d'affichage actuelle, au moins selon l'existence d'une position de fenêtre vacante dans l'interface d'affichage actuelle, comprend au moins l'un des éléments suivants :
ajuster, en réponse à la détermination qu'une position de fenêtre vacante existe dans l'interface d'affichage actuelle, une largeur de la fenêtre devant être ajoutée selon une largeur de la position de fenêtre vacante et de la largeur de la fenêtre devant être ajoutée, et ensuite ajouter la fenêtre devant être ajoutée à cette position vacante ;
dans lequel, en réponse à la détermination que n = 1, une largeur de la fenêtre d'application est égale à d/3 ou 2d/3, et une largeur de la fenêtre devant être ajoutée est égale à d/3, dans lequel d désigne une largeur de l'interface d'affichage actuelle, l'ajout de la fenêtre devant être ajoutée à la position de fenêtre vacante contigüe à une fenêtre d'application d'une interface d'affichage d'origine ;
en réponse à la détermination que n = 2, une largeur des n fenêtres d'application est choisie pour être égale à d/3 ou 2d/3, dans lequel d désigne une largeur de l'interface d'affichage actuelle, la réduction, en réponse à la détermination qu'il n'existe aucune position de fenêtre vacante dans l'interface d'affichage actuelle, une largeur d'une fenêtre d'application d'une largeur de 2d/3 dans l'interface d'affichage actuelle à d/3, l'ajout de 1 à n, et l'ajout de la fenêtre devant être ajoutée d'une largeur de d/3, en tant qu'une n-ième fenêtre d'application dans l'interface d'affichage actuelle à l'interface d'affichage actuelle ; l'ajout, en réponse à la détermination que la position de fenêtre vacante existe dans l'interface d'affichage actuelle, de la fenêtre devant être ajoutée à la position de fenêtre vacante d'une interface d'affichage d'origine ; ou
en réponse à la détermination que n = 3, les largeurs des n fenêtres d'application sont chacune égale à d/3, dans lequel d désigne une largeur de l'interface d'affichage actuelle, l'ajout de la fenêtre devant être ajoutée d'une largeur de d/3 à une position de la n-ième fenêtre d'application dans la fenêtre d'application actuelle, dans lequel une n-ième fenêtre d'application d'origine dans l'interface d'affichage actuelle est poussés vers une interface d'affichage succédant à la fenêtre d'application actuelle.

10. Procédé selon la revendication 9, dans lequel l'ajustement d'une largeur de la fenêtre devant être ajoutée selon une largeur de la position de fenêtre vacante et de la largeur de la fenêtre devant être ajoutée, et ensuite l'ajout de la fenêtre devant être ajoutée dans la position de fenêtre vacante, comprend :
l'ajout, en réponse à la détermination que la largeur de la fenêtre devant être ajoutée est inférieure ou égale à la largeur de la position de fenêtre vacante, de la fenêtre devant être ajoutée à la position de fenêtre vacante selon une largeur d'origine ; et
la réduction, en réponse à la détermination qu'une largeur de la fenêtre devant être ajoutée est supérieure à celle de la position de fenêtre vacante, d'une largeur de la fenêtre devant être ajoutée à celle de la position de fenêtre vacante, et ensuite l'ajout de la fenêtre devant être ajoutée à la position de fenêtre vacante.

11. Procédé selon la revendication 1, dans lequel l'opération d'édition de fenêtre de l'application est une opération de déplacement de fenêtre ; et
l'ajustement (S102) d'une disposition de fenêtre d'application de l'interface d'affichage actuelle selon l'opération d'édition de fenêtre de l'application et d'une file d'attente de fenêtre comprend au moins l'un des éléments suivants : le déclenchement d'un bouton d'ajustement de la position de fenêtre d'application pour suspendre une fenêtre d'application devant être ajustée en tête de la file d'attente de fenêtre, le glissement de la fenêtre d'application devant être ajustée vers une position devant être ajustée, et l'agencement séquentiel des fenêtres d'application d'origine vers l'arrière le long de la file d'attente de fenêtre, dans une direction opposée à la direction du point de départ, après la détermination de la position ; ou
de faire glisser une fenêtre d'application devant être ajustée vers une position de bord de l'interface d'affichage actuelle, d'activer une autre interface d'affichage contigüe à l'interface d'affichage actuelle, et procéder au réagencement d'une fenêtre d'application d'une nouvelle interface d'affichage.

12. Support de stockage non volatile lisible par ordinateur, stockant des instructions de programme informatique, dans lequel les instructions de programme informatique mettent en œuvre les étapes du procédé selon l'une quelconque des revendications 1 à 11 lorsqu'elles sont exécutées collectivement par un ou plusieurs processeurs.

13. Terminal embarqué, comprenant :
un ou des processeurs (651) ; et
une mémoire (652) configurée pour stocker des instructions exécutables par l'un ou les processeurs (651), dans laquelle le ou les processeurs (651) sont collectivement configurés pour exécuter les instructions exécutables contenues dans la mémoire (652), de sorte à mettre en œuvre les étapes du procédé selon l'une quelconque des revendications 1 à 11.

14. Véhicule (600) comprenant un terminal embarqué selon la revendication 13.
